# EUROPÄISCHE PATENTSCHRIFT

(11) **EP 2 639 733 B1**
(45) Veröffentlichungstag und Bekanntmachung des Hinweises auf die Patenterteilung: **18.05.2016**
(21) Anmeldenummer: 13159029.1
(22) Anmeldetag: 13.03.2013
(51) Int. Cl.: G06F 21/36

(54) **Verfahren zum Eingeben eines Passworts und Computerprogrammprodukt**
Method for entering a password and computer program product
Procédé destiné à saisir un mot de passe et produit de programme informatique

(30) Priorität: 13.03.2012 DE 102012005415; 18.10.2012 DE 102012020817
(43) Veröffentlichungstag der Anmeldung: 18.09.2013
(73) Patentinhaber: Bonhoff, Hannes, 13187 Berlin (DE)
(72) Erfinder: Bonhoff, Hannes, 13187 Berlin (DE)
(74) Vertreter: Bittner, Thomas L.

(56) Entgegenhaltungen:
- DE-A1-102009 016 527
- US-A1- 2004 113 819
- US-A1- 2009 172 810

## Beschreibung

Die Erfindung betrifft ein Verfahren zum Eingeben eines Passworts und ein Computerprogrammprodukt.

### Hintergrund der Erfindung

Eine Vielzahl elektronischer Geräte sind anstelle von einer Tastatur mit einem berührungsempfindlichen Bildschirm, einem so genannten Touchscreen ausgestattet. Zu den meist verbreiteten Geräten mit Touchscreen zählen Mobiltelefone, besonders Smartphones, sowie Tablet-Computer und PDAs (Personal Digital Assistants). Touchscreens sind aber auch in vielen anderen elektronischen Geräten zu finden, wie bspw. in Navigationssystemen, Fernbedienungen und Türschlössern.

Ein Großteil elektronischer Geräte mit Touchscreen enthält persönliche Daten wie Emails, Passwörter oder Kreditkartennummern die vor unbefugten Zugriffen geschützt werden müssen. Beim Einschalten des Geräts wird hierfür üblicherweise ein Passwort abgefragt, nach dessen korrekter Eingabe eine bestimmte Aktion ausgeführt wird, z.B. das Gerät zur vollständigen Benutzung zu entsperren. Alternativ zur Eingabe eines Passworts kann auch ein bestimmtes Muster abgefragt werden, welches mit dem Finger auf dem Touchscreen gezeichnet wird. Wie in dem Dokument WO 2011/143476 A1 beschrieben ist, kann die Eingabe verschiedener Muster auch lediglich zur Ausführung von Aktionen führen, die das Gerät nicht zur vollständigen Benutzung entsperren, wie bspw. die Anzeige des Emailpostfachs während aktivierter Displaysperre.

Wenn das Gerät eine bestimmte Zeit nicht verwendet wurde, wird üblicherweise automatisch eine Displaysperre aktiviert oder das Gerät geht in einen Standby-Modus. Zur weiteren Verwendung des Geräts nach aktivierter Displaysperre oder Standby-Modus ist wiederum die Eingabe des Passworts notwendig. Bei Geräten wie z.B. elektronischen Türschlössern mit Touchscreen stellt der Schutz vor unbefugtem Zugriff die primäre Funktion des Geräts dar. Nach Eingabe des korrekten Passworts bei einem Türschloss wird eine Aktion ausgeführt, die das Öffnen der Tür ermöglicht.

Zur Passworteingabe über ein Touchscreen wird üblicherweise eine Tastatur auf dem Touchscreen abgebildet, auf welcher die Buchstaben und/oder Zahlen des Passworts nacheinander mit der Fingerspitze angetippt werden. Da die Anzeige der Zeit besonders bei mobilen elektronischen Geräten wie Smartphones eine wichtige Funktion darstellt, wird zusätzlich zu der Tastatur auch die aktuelle Zeit häufig zusammen mit Datum angezeigt. Bei aktivierter Displaysperre kann somit die aktuelle Uhrzeit abgelesen werden, ohne dass die Displaysperre aufgehoben werden muss.

Die Tasten der zur Passworteingabe angezeigten Tastatur sind zur komfortablen Eingabe üblicherweise ähnlich groß dimensioniert wie eine Fingerspitze. Bereits bei einer Tastatur mit den Zahlen 0 bis 9 nimmt die Tastatur auf einem Smartphone etwa zwei Drittel des Bildschirms in Anspruch. Auch für die Eingabe des oben erwähnten Musters wird ähnlich viel Platz auf dem Bildschirm benötigt. Dies hat den Nachteil, dass der verbleibende Platz oft nicht ausreicht, um weitere Informationen darzustellen. Solche weiteren Informationen könnten z.B. Benachrichtigungen über aktuelle Kalendereinträge oder neu eingegangene Nachrichten, wie Emails, SMS oder MMS umfassen. Auch die Anzeige der Zeit wird durch die Darstellung einer Tastatur auf dem Bildschirm eingeschränkt. Hier ist der verbleibende Platz auf dem Bildschirm nicht mehr ausreichend, um eine analoge Uhr in einer zum Ablesen komfortablen Größe anzuzeigen. Die Zeitanzeige bei gleichzeitiger Anzeige einer Tastatur erfolgt daher überwiegend anhand einfacher digitaler Uhren.

Ein weiterer Nachteil der Passworteingabe durch das Antippen der alphanumerischen Zeichen wie bspw. Buchstaben oder Zahlen des Passworts auf einer auf dem Touchscreen abgebildeten Tastatur sind die Spuren, die auf dem Touchscreen hinterlassen werden. Diese Spuren können zum Einen durch Rückstände auf dem Touchscreen oder durch Schweiß oder Fette auf dem Finger kommen. Der Touchscreen kann z.B. durch Rückstände von Reinigungsmitteln, Staub oder Schweiß und Fette die bspw. vom Anlegen eines Smartphones ans Ohr zum Telefonieren stammen verschmutzt sein. In diese Schicht zeichnet dann der Finger oder allgemein der Gegenstand mit welchem der Touchscreen bedient wird die Spuren des Passworts. Bei einem rückstandslos sauberen Touchscreen hingegen genügen Schweiß und Fette an dem Finger, um Spuren des Passworts auf dem Touchscreen zu hinterlassen. Solche Spuren bleiben so lange auf dem Touchscreen erhalten, bis sie verwischt werden.

Anhand der Spuren auf dem Touchscreen lassen sich die im Passwort vorkommenden alphanumerischen Zeichen ablesen, was die Entschlüsselung des Passworts und damit den unbefugten Zugriff erheblich erleichtert. Auch das in der Patentschrift WO 2011/143476 A1 beschriebene Muster, welches mit dem Finger auf dem Touchscreen gezeichnet wird, kann anhand der hinterlassenen Spuren auf dem Touchscreen erkannt werden.

Das Dokument US 2004/0113819 A1 offenbart ein Verfahren zum Eingeben eines Sicherheitscodes mittels eines berührungsempfindlichen Bildschirms eines elektronischen Gerätes. Steuerbereiche des Bildschirms können mittels eines Fingers oder eines Stiftes aktiviert werden. Der Finger bzw. der Stift werden entlang einer vorgegebenen Bahn zwischen verschiedenen Steuerbereichen bewegt, um den Sicherheitscode einzugeben.

Im dem Dokument DE 10 2009 016527 A1 ist ein Verfahren zum Eingeben eines Zugangscodes für einen sicheren Zugang zu einem elektronischen Dienst beschrieben. Das Verfahren umfasst das Bereitstellen eines zufälligen Anfangszustands einer Mehrzahl von benutzerwählbaren Feldern. Des Weiteren umfasst das Verfahren eine Anzeige der Mehrzahl an benutzerwählbaren Feldern über eine grafische Schnittstelle. Die Eingabe eines Zugangscodes erfolgt durch Verändern des Zustands der angezeigten Felder.

Das Dokument US 2009/0172810 A1 betrifft eine Vorrichtung und ein Verfahren zum Eingeben eines grafischen Passworts, wobei Eingabeelemente mittels eines Rades dargestellt sind.

### Zusammenfassung der Erfindung

Aufgabe der Erfindung ist verbesserte Technologien zum Eingeben eines Passworts bereitzustellen, wobei die Passworteingabe weniger Platz auf dem Bildschirm in Anspruch nimmt und beim Eingeben möglichst keine Spuren hinterlassen werden, die zur Entschlüsselung des Passworts verwendet werden können.

Diese Aufgabe wird erfindungsgemäß durch ein Verfahren nach dem unabhängigen Anspruch 1 sowie einem Computerprogrammprodukt nach dem unabhängigen Anspruch 13 gelöst. Vorteilhafte Ausgestaltungen der Erfindung sind Gegenstand von abhängigen Unteransprüchen.

Die Anzeigeeinrichtung ist mit der Datenverarbeitungseinrichtung derart gekoppelt, dass eine Benutzereingabe mittels einer Benutzerschnittstelle, beispielsweise einer Tastatur, einer Maus, eines Trackballs, eines Scrollrads, eines Touchpads und/oder einer Funktionstaste, erfasst und verarbeitet wird. Die Anzeigeeinrichtung kann eine berührungsempfindliche Anzeigeeinrichtung sein, auch Touchscreen genannt. Bei einer berührungsempfindlichen Anzeigeeinrichtung kann eine Benutzereingabe in Form einer Berührung der Anzeigeeinrichtung von der Datenverarbeitungseinrichtung erfasst und ausgewertet werden. Derartige Anzeigeeinrichtungen sind aus dem Stand der Technik hinlänglich bekannt. Sie ermöglichen eine einfache Steuerung der Datenverarbeitungseinrichtung. Die Datenverarbeitungseinrichtung kann einen oder mehrere Prozessoren aufweisen. Des Weiteren kann wenigstens eine Speichereinheit in der Datenverarbeitungseinrichtung vorgesehen sein. Die Speichereinrichtung kann als flüchtiger Speicher, beispielsweise Readonly-memory (RAM) oder als nicht flüchtiger Speicher, beispielsweise als Magnetspeicher (Festplatte), EEPROM, optischer Speicher (CD, DVD), digitaler Speicher (Flash memory) oder Halbleiterspeicher (Solid State Drive) gebildet sein. Die Datenverarbeitungseinrichtung kann einen Kommunikationsadapter aufweisen, beispielsweise für ein Netzwerk (local area network), einen USB-Anschluss, ein kabelloses Netzwerk (wireless local area network), Bluetooth und/oder für near field communication.

Die auf der Anzeigeeinrichtung abgebildete Uhr kann jedwede Ausbildung einer Uhr entsprechen. Es kann sich somit bspw. um Armbanduhren, Wanduhren, Standuhren, Taschenuhren, Kirchenuhren oder auch Sanduhren handeln. Somit kann die Zeit allgemein sowohl digital als auch analog wiedergegeben werden. Bei einer digitalen Uhr bewegen bzw. verändern sich zur Zeitanzeige Zahlen und bei einer analogen Uhr bewegen bzw. verändern sich zur Zeitanzeige Zeiger. Neben der üblicherweise vorhandenen Anzeige von Stunde und Minute können auch weitere Anzeigen enthalten sein, wie z.B. Sekunde, Datum, Gangreserve, Mondphase und Uhrzeiten in anderen Zeitzonen. Bei der Verwendung einer Gangreserve ist zu bevorzugen, diese zur Anzeige des Ladungszustands einer Batterie der Datenverarbeitungseinrichtung zu verwenden. Neben konventionellen Vollkreisskalen mit 12 Stunden und 60 Minuten können bspw. auch 6 Stunden, 24 Stunden oder Teilkreisskalen Anwendung finden. Ebenso können gerade Skalen, die nicht entlang eines Kreises gebogen sind verwendet werden. Auch Kombinationen von digitaler und analoger Anzeige sind möglich.

Es ist vorgesehen, dass die auf der Anzeigeeinrichtung angezeigte Uhr ein Uhrenelement aufweist, dessen Darstellung zeitabhängig ist. Die hier verwendete Bezeichnung Uhrenelement oder nur Element bezieht sich allgemein auf Bauteile oder Bestandteile einer Uhr. Eine zeitabhängige Darstellung eines Uhrenelements beschreibt eine sich mit der Zeit verändernde Darstellung, sodass zu einem Zeitpunkt die Darstellung des Uhrenelements von der Darstellung zu einem anderen Zeitpunkt abweicht. Die Zeitabhängigkeit der Darstellung des Uhrenelements kann sowohl durch eine direkte Abhängigkeit von der Zeit als auch durch eine indirekte Abhängigkeit von der Zeit charakterisiert sein. Bei einer direkten Abhängigkeit von der Zeit ist bspw. einer bestimmten Uhrzeit eine bestimmte Darstellung des Uhrenelements zugeordnet. Als Beispiel sei hier ein Stundenzeiger genannt, der um 4 Uhr auf die Stunde "4" und um 8 Uhr auf die Stunde "8" zeigt und deren Darstellung sich somit mit fortschreitender Zeit entweder kontinuierlich oder periodisch sprunghaft verändert. Bei einer indirekten Abhängigkeit von der Zeit verändert sich die Darstellung eines Uhrenelements ebenfalls mit fortlaufender Zeit, allerdings in Abhängigkeit von einer anderen Größe. Als Beispiel sei hier eine Gangreserve- bzw. eine Restlaufanzeige genannt, welche den aktuellen Ladezustand einer Batterie der Datenverarbeitungseinrichtung anzeigt. Hier verändert sich die Darstellung der Gangreserveanzeige mit fortschreitender Zeit in direkter Abhängigkeit von dem Ladezustand der Batterie. Es ist somit vorgesehen, dass die Darstellung der Uhr sich mit der fortlaufenden Zeit verändert. So wird gewährleistet, dass ausgehend von der Darstellung einer Uhr zu einem einen Zeitpunkt eine andere Darstellung angezeigt wird, wenn man zu einem anderen Zeitpunkt auf die Anzeigeeinrichtung blickt.

Die Benutzereingabe kann sich allgemein auf das Bedienen eines Eingabegeräts beziehen. Bekannte Eingabegeräte sind bspw. Tastaturen, Computer-Mäuse, Funktionstasten, Trackballs, Touchpads, Touchscreens, Eingabestifte und Scrollräder. Allgemein umfasst eine Benutzereingabe Aktionen wie z.B. das Drücken von Tasten, das Drehen von Scrollrädern oder Trackballs und das Berühren von Touchpads und Touchscreens. Eine Benutzereingabe kann eine oder mehrere Aktionen des Benutzers umfassen. Eine Benutzereingabe anhand eines Touchscreens kann sich allgemein auf jedwede Berührung oder Berührungen mit einem Finger oder einem dafür vorgesehenen Stift oder Gegenstand beziehen. Des Weiteren kann eine Berührung mit mehreren Fingern gleichzeitig ausgeführt werden, wie bspw. beim Hineinzoomen in ein Bild oder Dokument zwei Finger voneinander weggeführt werden. Eine Berührung des Touchscreens kann ein kurzes Antippen oder aber eine für eine gewisse Zeit anhaltende Berührung an einer bestimmten Stelle des Touchscreens darstellen. Ebenso kann eine Berührung einem schnellen Streichen entlang des Touchscreens wie beim Scrollen von Webseiten oder einem langsameren Ziehen entlang des Touchscreens wie beim Markieren von Text entsprechen. Das Streichen oder Ziehen der Berührung kann sowohl entlang gerader Linien als auch entlang gekrümmter Linien sowie Ellipsen und Kreisen erfolgen.

Der Benutzereingabe und der ersten Darstellung des Uhrenelements kann ein alphanumerisches Zeichen des Passworts zugeordnet werden. Die Benutzereingabe kann hier als Auslöseimpuls zur Registrierung eines Zeichens des Passworts von der Datenverarbeitungseinrichtung dienen. Neben der Funktion als Auslöseimpuls können auch die Position, Art und Dauer der Benutzereingabe auf der Anzeigeeinrichtung von der Datenverarbeitungseinrichtung aufgenommen und für die Zuordnung eines Zeichens des Passworts verwendet werden. Anhand der Daten der Benutzereingabe in Kombination mit der Darstellung des Uhrenelements kann die Datenverarbeitungseinrichtung ein alphanumerisches Zeichen des Passworts registrieren. Bei einer analogen Uhr, welche bspw. die Uhrzeit 6:30 Uhr anzeigt, kann der Stundenzeiger als ein Uhrenelement definiert sein und der Stellung des Stundenzeigers die Zahl "6" zugeordnet werden indem der Stundenzeiger vom Benutzer angeklickt oder angetippt wird. Ebenso kann in diesem Beispiel der Minutenzeiger als Uhrenelement definiert sein und der Stellung des Minutenzeigers die Zahl "30" zugeordnet werden, indem der Minutenzeiger angetippt wird. Auf einer digitalen Uhr können ebenfalls die angezeigten Zahlen angetippt und somit als Zeichen des Passworts von der Datenverarbeitungseinrichtung registriert werden. Auch kann die Passworteingabe auf ein Uhrenelement beschränkt sein, sodass kein anderes durch die Benutzereingabe ausgewählt werden kann. In diesem Fall ist die Position der Benutzereingabe auf der Anzeigeeinrichtung nicht von Bedeutung. Die Benutzereingabe dient hierbei lediglich als Auslöseimpuls zur Registrierung des von dem Uhrenelement angezeigten Zeichens.

Nach einem weiteren Aspekt umfasst die Erfindung ein Verfahren zum Eingeben eines Passworts mit folgenden Schritten: Bereitstellen einer Anzeigeeinrichtung, die mit einer Datenverarbeitungseinrichtung gekoppelt ist, Anzeigen einer Uhr mit einem Uhrenelement auf der Anzeigeeinrichtung, wobei eine erste Darstellung des Uhrenelements zeitabhängig ist, Erfassen einer Benutzereingabe und Zuordnen eines alphanumerischen Zeichens des Passworts zu der Benutzereingabe und einer weiteren Darstellung des Uhrenelements.

Der Benutzereingabe und einer weiteren Darstellung des Uhrenelements kann ein Zeichen des Passworts zugeordnet werden. Eine erste Darstellung eines Uhrenelements kann sich bei einer analogen Uhr bspw. auf einen Stundenzeiger beziehen, der auf die Stunde "6" zeigt. In diesem Beispiel kann sich eine weitere Darstellung des Uhrenelements auf den selbem Stundenzeiger allerdings auf die Stunde "4" zeigend beziehen. Somit kann in diesem Beispiel in Kombination mit der Benutzereingabe die Zahl "4" als Zeichen des Passworts registriert werden.

Das Uhrenelement kann mittels der Benutzereingabe von der ersten Darstellung in die weitere Darstellung überführt werden, wobei das alphanumerische Zeichen des Passworts der weiteren Darstellung des Uhrenelements zugeordnet wird.

Nach einem Aspekt des erfindungsgemäßen Verfahrens ist vorgesehen, ein Uhrenelement anhand einer Benutzereingabe von einer Darstellung in eine weitere Darstellung zu überführen. Dieser Vorgang kann bspw. einem Verstellen der von der Uhr angezeigten Zeit entsprechen. Bei einer analogen Uhr mit einem Stundenzeiger in der 6-Uhr-Stellung kann der Stundenzeiger z.B. angeklickt und auf die 4-Uhr-Stellung gezogen werden, um die Zahl "4" des Passworts einzugeben. Bei einer digitalen Uhr können die Zahlen der Anzeige verstellt werden indem mit dem Finger über sie gestrichen wird. Somit kann mittels der Benutzereingabe anhand einer Stundenanzeige mit einer 12-Stunden-Skala eine beliebige Zahl zwischen "1" und "12" eingestellt werden.

In einer Weiterbildung ist vorgesehen, dass ein weiteres Uhrenelement der Uhr angezeigt wird, wobei eine erste Darstellung des weiteren Uhrenelements nicht zeitabhängig ist und das weitere Uhrenelement mittels der Benutzereingabe von der ersten Darstellung in eine weitere Darstellung überführt wird und das alphanumerische Zeichen des Passworts der weiteren Darstellung des weiteren Uhrenelements und einer Darstellung des Uhrenelements zugeordnet wird.

Ein Uhrenelement, dessen Darstellung nicht zeitabhängig ist, wird zu jeder Uhrzeit gleich dargestellt. Bei einer analogen Uhr trifft dies z.B. auf die Stundenskala mit den dazugehörigen Stundenindexen und eventuell Stundenzahlen zu. Nach einem Aspekt des erfindungsgemäßen Verfahrens wird die Darstellung eines solchen nicht zeitabhängigen Uhrenelements anhand von einer Benutzereingabe verändert. Bspw. kann die Stundenskala einer analogen Uhr um einen gewissen Winkel gedreht werden. Hierbei ist zu beachten, dass die Überführung eines nicht zeitabhängigen Uhrenelements von einer Darstellung in eine andere Darstellung anhand von einer Benutzereingabe nicht als eine zeitabhängige Veränderung der Darstellung anzusehen ist. Der veränderten Darstellung des nicht zeitabhängigen Uhrenelements kann in Kombination mit einer Darstellung eines zeitabhängigen Uhrenelements ein Zeichen des Passworts zugeordnet werden. Als Beispiel sei hier eine analoge Uhr genannt, wobei das zeitabhängige Uhrenelement ein auf die Minute "15" zeigender Minutenzeiger ist und das nicht zeitabhängige Uhrenelement eine Stundenskala ist. Anhand von einer Benutzereingabe kann die Stundenskala um 60 Grad im Uhrzeigersinn gedreht werden, sodass der Minutenzeiger auf die Stunde "1" der Stundenskala zeigt und diese Zahl "1" dem Passwort zugeordnet werden kann. Somit kann mittels der Benutzereingabe anhand einer 12-Stunden-Skala eine beliebige Zahl zwischen "1" und "12" auf dem Minutenzeiger eingestellt werden.

In einer Ausführung der Erfindung ist vorgesehen, dass die Darstellung des Uhrenelements und/oder die Darstellung des weiteren Uhrenelements nach Beendigung der Benutzereingabe jeweils von der weiteren Darstellung zurück in die erste Darstellung überführt wird.

Nachdem die Darstellung eines Uhrenelements anhand von einer Benutzereingabe verändert wurde kann das Uhrenelement in die ursprüngliche Darstellung zurückgestellt werden. Hierbei ist vorgesehen, dass die Überführung in die ursprüngliche Darstellung anhand der Datenverarbeitungseinrichtung und nicht anhand von einer Benutzereingabe ausgeführt wird. Wenn bspw. der Minutenzeiger in seiner ursprünglichen Stellung bei der Minute "15" anhand von einer Berührung mit dem Touchscreen auf eine andere Stellung gezogen wird, kann sich der Minutenzeiger nach dem Lösen der Berührung wieder auf die Minute "15" zurückstellen. Somit wird die auf der Uhr eingegebene Zahl des Passworts nach der Eingabe nicht mehr angezeigt und die ursprünglich angezeigte Uhrzeit ist wieder lesbar.

In einer Ausführung der Erfindung umfasst das Verfahren die folgenden Schritte, Erfassen einer weiteren Benutzereingabe während der Überführung des Uhrenelements und/oder des weiteren Uhrenelements von der jeweiligen weiteren Darstellung zurück in die jeweilige erste Darstellung und Zuordnen eines weiteren alphanumerischen Zeichens des Passworts zu der Darstellung des Uhrenelements und/oder der Darstellung des weiteren Uhrenelements zum Zeitpunkt der weiteren Benutzereingabe. Alternativ kann die Darstellung des Uhrenelements und/oder die Darstellung des weiteren Uhrenelements zum Zeitpunkt der weiteren Benutzereingabe in eine weitere Darstellung überführt werden und das weitere alphanumerische Zeichen des Passworts zu der weiteren Darstellung des Uhrenelements und/oder der weiteren Darstellung des weiteren Uhrenelements zugeordnet werden.

Gemäß einer Weiterbildung ist vorgesehen, dass die Uhr zwischen der Benutzereingabe und der weiteren Benutzereingabe verändert wird. Es kann vorgesehen sein, dass das Uhrenelement zwischen der Benutzereingabe (beispielsweise eine Berührung) und der weiteren Benutzereingabe (beispielsweise eine weitere Berührung) wieder in die erste Darstellung überführt wird. Die Überführung kann hierbei kontinuierlich und langsam genug erfolgen, so dass eine weitere Benutzereingabe möglich ist, während das Uhrenelement noch in die erste Darstellung zurück überführt wird. Der Darstellung des Uhrenelements zum Zeitpunkt der weiteren Benutzereingabe kann ein weiteres Zeichen des Passworts zugeordnet werden. Alternativ kann das Uhrenelement anhand der weiteren Benutzereingabe wiederum in eine neue Darstellung gestellt werden, wobei der neuen Darstellung dann ein Zeichen des Passworts zugeordnet wird. Bei einer genügend langsamen Rückstellbewegung kann somit das sich bewegende Uhrenelement durch eine zweite Benutzereingabe in eine neue Stellung bewegt werden, der ein weiteres Zeichen des Passworts zugeordnet wird. Hierbei blockiert die aufgrund der zweiten Benutzereingabe erzeugte Bewegung während der Eingabedauer die Rückstellbewegung. Die bei solch einer Passworteingabe von einem Finger auf einem Touchscreen hinterlassenen Spuren hängen nicht nur von der Uhrzeit ab zu der das Passwort eingegeben wurde. Die hinterlassenen Spuren hängen zusätzlich noch von der Wartezeit zwischen Lösen der ersten Berührung und Aufbauen der zweiten Berührung während der Rückstellbewegung ab, sowie der Geschwindigkeit der Rückstellbewegung.

Nach einer Ausführungsvariante umfasst das erfindungsgemäße Verfahren die folgenden Schritte: Anzeigen einer weiteren Uhr mit einem Uhrenelement auf der Anzeigeeinrichtung, wobei eine erste Darstellung des Uhrenelements der weiteren Uhr zeitabhängig ist, Erfassen einer weiteren Benutzereingabe und Zuordnen eines weiteren alphanumerischen Zeichens des Passworts zu der weiteren Benutzereingabe und der ersten Darstellung des Uhrenelements der weiteren Uhr oder einer weiteren Darstellung des Uhrenelements der weiteren Uhr.

Zur Eingabe von weiteren alphanumerischen Zeichen des Passworts ist in einer Variante der Erfindung vorgesehen, eine weitere Uhr auf der Anzeigeeinrichtung darzustellen. Auf der weiteren Uhr kann ein weiteres Zeichen des Passworts nach demselben Verfahren eingegeben werden, wie auf der ersten Uhr das erste Zeichen des Passworts eingegeben wurde. Durch die Anzeige beliebig vieler Uhren, können somit beliebig viele Zeichen des Passworts eingegeben werden. Alternativ oder ergänzend kann vorgesehen sein, auf jeder Uhr mehrere Zeichen des Passworts einzugeben. Die Anzeige mehrerer Uhren wird üblicherweise zur Anzeige der Zeit in verschiedenen Zeitzonen, Ländern oder Städten verwendet.

Nach einem weiteren Aspekt der Erfindung kann eine weitere Benutzereingabe erfasst werden und ein weiteres alphanumerisches Zeichen des Passworts der weiteren Benutzereingabe und einer Darstellung des Uhrenelements oder einer Darstellung des weiteren Uhrenelements oder einer Darstellung eines anderen Uhrenelements zugeordnet werden.

Nach einer Ausführungsform kann vorgesehen sein, dass eine weitere Benutzereingabe erfasst wird und der weiteren Benutzereingabe sowie einer Darstellung eines Uhrenelements ein weiteres alphanumerisches Zeichen des Passworts zugeordnet wird. Hiermit lassen sich Passwörter beliebiger Länge eingeben. Falls eine Uhr mit einem verstellbaren Element dargestellt wird, kann vorgesehen sein, dass das Uhrenelement mittels einer weiteren Berührung weiter verstellt wird, so dass die Uhr in eine weitere Darstellung überführt wird und der weiteren Darstellung ein weiteres alphanumerisches Zeichen des Passworts zugeordnet wird. Es kann weiterhin vorgesehen sein, mittels mehrerer hintereinander ausgeführten Berührungen mehrere Darstellungen der Uhr zu erzeugen, die jeweils einem alphanumerischen Zeichen des Passworts zugeordnet werden. Zur Eingabe weiterer alphanumerischer Zeichen des Passworts kann ein Uhrenelement verwendet werden, welches bereits zur Eingabe voriger Zeichen des Passworts verwendet wurde. Ebenso kann zur Eingabe weiterer Zeichen des Passworts ein Uhrenelement verwendet werden, welches noch nicht zur Eingabe eines vorigen Zeichens des Passworts verwendet wurde.

In einer Ausführungsvariante der Erfindung ist vorgesehen, ein weiteres alphanumerisches Zeichen des Passworts einer weiteren Benutzereingabe in Kombination mit einer Darstellung des Uhrenelements oder einer Darstellung des weiteren Uhrenelements oder einer Darstellung des/eines anderen Uhrenelements zuzuordnen, ohne das Uhrenelement oder das weitere Uhrenelement oder das andere Uhrenelement in eine weitere Darstellung zu überführen.

Weitere Zeichen des Passworts können anhand zur Eingabe voriger Zeichen bereits verwendeter Uhrenelemente eingegeben werden, ohne die Darstellung dieser Uhrenelemente zu verändern. Bspw. können angezeigte Zahlen zur Eingabe angetippt werden. Auch bei der Eingabe eines vorher bereits eingegebenen Zeichens, kann das Zeichen registriert werden ohne die Darstellung eines Uhrenelements zu verändern. Auch können weitere Zeichens des Passworts anhand anderer, noch nicht verwendeter Uhrenelemente eingegeben werden, ohne die Darstellung dieser vorher noch nicht verwendeter Uhrenelemente zu verändern.

In einem Ausführungsbeispiel umfasst die Benutzereingabe mehrere Aktionen eines Benutzers.

Die Benutzereingabe kann mehrere aufeinanderfolgende Aktionen des Benutzers umfassen. Eine Aktion eines Benutzers bezieht sich auf jegliche Bedienung eines Eingabegeräts, wie bspw. das Klicken, Scrollen, Tippen oder Ziehen. Bevor ein Zeichen des Passworts registriert wird, können ein oder mehrere Uhrenelemente angetippt/angeklickt oder bewegt werden.

In einem weiteren Ausführungsbeispiel umfasst die Benutzereingabe genau eine Aktion des Benutzers und der Benutzereingabe werden in Kombination mit einer Darstellung des Uhrenelements oder einer Darstellung des weiteren Uhrenelements oder einer Darstellung des/eines anderen Uhrenelements mehrere alphanumerische Zeichen des Passworts zugeordnet.

Einer Benutzereingabe die nur eine Aktion des Benutzers umfasst, können mehrere Zeichen des Passworts zugeordnet werden. Eine solche Aktion kann sich bspw. auf das Antippen oder Anklicken einer Uhr oder eines Bedienknopfs beziehen. Durch das Antippen einer Uhr, kann bspw. die angezeigte Zeit in Stunden, Minuten und Sekunden dem Passwort zugeordnet werden. Auch kann ein Uhrenelement in einer bestimmten Stellung oder an einer bestimmten Stelle des Uhrenelements für eine gewisse Dauer festgehalten werden. Hier kann jeweils nach einem definierten Zeitintervall mehrmals eine bestimmte Zahl des Passworts der Stelle auf dem Uhrenelement oder der Stellung des Uhrenelements zugeordnet werden.

In einer Ausführung des erfindungsgemäßen Verfahrens ist die Anzeigeeinrichtung eine berührungsempfindliche Anzeigeeinrichtung und als Benutzereingabe werden eine oder mehrere Berührungen der Anzeigeeinrichtung erfasst.

Die Anzeigeeinrichtung kann einem berührungsempfindlichen Bildschirm bzw. einem Touchscreen entsprechen. Eine Benutzereingabe auf einem Touchscreen entspricht einer oder mehreren Berührungen des Touchscreen. Eine Berührung des Touchscreens kann bspw. anhand von einem Finger oder einem dafür vorgesehenen Stift erfolgen.

Nach einem Aspekt der Erfindung wird die Uhr als eine analoge Uhr dargestellt und das Uhrenelement mit der zeitabhängigen Darstellung ist ein Stundenzeiger, ein Minutenzeiger, ein Sekundenzeiger oder eine Restlaufanzeige.

Eine Uhr mit analoger Anzeige kann u.a. eines oder mehrere der folgenden Uhrenelemente aufweisen: Stundenzeiger, Minutenzeiger, Sekundenzeiger, Zifferblatt und Gehäuse. Bei der an einem Bildschirm üblicherweise verwendeten Draufsicht auf die Uhr ist von dem Gehäuse hauptsächlich die Lünette sichtbar. Das Zifferblatt kann Skalen für Stunde und Minute sowie eventuell auch für die Sekunde enthalten. Uhrenelemente mit zeitabhängiger Darstellung von einer analogen Uhr sind primär die Zeiger, wie Stundenzeiger, Minutenzeiger und Sekundenzeiger. Aber auch zusätzliche Bestandteile einer analogen Uhr, wie bspw. eine Datumsanzeige, eine Restlauf- bzw. Gangreserveanzeige, Mondphasenanzeige und Anzeige der Zeit in weiteren Zeitzonen enthalten Uhrenelemente mit zeitabhängiger Darstellung.

Nach einem weiteren Aspekt der Erfindung wird die Uhr als eine analoge Uhr dargestellt und das Uhrenelement mit nicht zeitabhängiger Darstellung ist ein Zifferblatt oder eine Lünette.

Analoge Uhren weisen mehrere Uhrenelemente auf, deren Darstellung zur Zeitanzeige zu jeder Zeit gleich ist. Diese sind bspw. Skalen für Stunde, Minute und Sekunde, das Zifferblatt allgemein, das Uhrengehäuse mit Armband oder die Lünette. Auch die Zahlen bzw. Beschriftungen der verschiedenen Skalen analoger Uhren stellen Uhrenelemente dar mit nicht zeitabhängiger Darstellung.

Ein Element einer Uhr kann auch aus einer Kombination von mehreren Bestandteilen der Uhr bestehen. Bei einer analogen Uhr kann es sinnvoll sein, die Lünette mit dem Zifferblatt und den Indexen der Stunden- und Minutenskala zu verbinden und als ein zusammengesetztes Uhrenelement zu betrachten. So würde sich beim Bewegen der Lünette anhand von einer Berührung mit dem Touchscreen die Skala der Uhr mitbewegen.

Nach einem weiteren Aspekt der Erfindung wird die Uhr als eine digitale Uhr dargestellt und das Uhrenelement mit zeitabhängiger Darstellung ist eine oder mehrere Zahlen oder ein oder mehrere Buchstaben.

Die Uhr kann beispielsweise als eine digitale Uhr dargestellt werden, wobei das Uhrenelement mit zeitabhängiger Darstellung eine oder mehrere Zahlen, ein oder mehrere Buchstaben oder eine Kombination hiervon ist. Bei einer digitalen Uhr kann die Anzeige eines oder mehrere der folgenden Uhrenelemente mit zeitabhängiger Darstellung aufweisen: Stunde, Minute, Sekunde, sowie Tag, Monat und Jahr, wobei dessen aktuelle Werte in Form von Zahlen oder Buchstaben dargestellt werden. Wie bei einer Zahlenscheibe, einem Zahlenrad oder einem Zahlenstrahl können zusätzlich zu den aktuellen Werten der Zeit auch die bereits vergangenen sowie die noch kommenden Werte auf der Anzeige sichtbar sein. Hier können Uhrenelemente mit mehreren Zahlen oder Buchstaben in mehrere Elemente unterteilt werden. Die erste Zahl der Minutenanzeige kann als eigenständiges Uhrenelement für die Anzahl der Zehner-Minuten definiert werden. Eine Anzeige des Monats in Form von Abkürzungen mit drei Buchstaben, wie z.B. FEB für Februar, kann somit in drei separate Uhrenelemente unterteilt werden.

Nach einem weiteren Aspekt der Erfindung ist ein Computerprogrammprodukt geschaffen, das auf einem Datenträger gespeichert ist und das konfiguriert ist, bei einer Ausführung mittels einer Datenverarbeitungseinrichtung das erfindungsgemäße Verfahren durchzuführen.

Das erfindungsgemäße Verfahren kann in einer geeigneten Programmiersprache wie bspw. C, C++, Objective-C oder Java in Form eines Computerprogramms umgesetzt werden. Das Verfahren kann in ein Betriebssystem wie bspw. Android, iOS oder Windows integriert werden oder als eine separat zu installierende Software bereitgestellt werden. In Form von einer Android Applikation bzw. App kann das erfindungsgemäße Verfahren bspw. in die Displaysperre integriert und zum Entsperren des Geräts durch Eingabe eines Passworts verwendet werden. Mögliche Datenverarbeitungseinrichtungen stellen Mobiltelefone, besonders Smartphones, Personal Computer, Tablet-Computer und PDAs (Personal Digital Assistants) dar, sowie andere elektronische Geräte, wie bspw. Navigationssysteme, Fernbedienungen und Tür- und Tresorschlösser.

Zur Verdeutlichung der Vielfalt möglicher Uhren, die zur Passworteingabe verwendet werden können sind im Folgenden einige Beispiele genannt. Bei der Uhr aus dem Dokument WO 2011/069218 A1 kann die Passworteingabe bspw. über das Verstellen des Minutenzeigers erfolgen, wobei die Stundenanzeige vollständig mitrotieren würde. Bei der Uhr aus dem Dokument WO 00/072095 A3 könnten die dem Passwort entsprechenden Uhrenelemente durch ein Antippen ausgewählt werden. Bei Uhren nach dem Dokument DE 602005001612 T2 ließen sich der Minutenzeiger verstellen und separat davon die Planetenräder mit den Stundenzahlen durch ein Antippen drehen. Bei den Uhren nach den Dokumenten WO 2012/070009 A1 und CH 694109 A5 ließen sich die inneren und äußeren Scheiben mit den halbierten Zahlen rotieren, sodass nacheinander die Zahlen des Passworts eingestellt werden können. Auf der Gangreserve von Uhren des Dokuments US 2011/182152 A1 kann durch Drehung der Scheiben ein dreistelliges Passwort eingestellt werden.

Uhren mit digitaler Zeitanzeige in Form von Zahlen, wie bspw. in dem Dokument WO 2011/057149 A2 beschrieben, bieten den Vorteil, dass zusätzliche Zahlen zu den Zahlen der dargestellten Zeit auf der Uhr zu sehen sind. Dies geht daraus hervor, dass z.B. die Stunde in Form eines Bands dargestellt ist, auf welchem die möglichen Zahlen der Stunde aufgebracht sind. Ein solches Band bewegt sich alle Stunde um eine Zahl weiter, sodass in einem markierten Feld die aktuelle Stunde zu lesen ist. Außerhalb des markierten Felds sind die Zahlen der vergangenen Stunden auf der einen Seite, sowie die Zahlen der kommenden Stunden auf der anderen Seite sichtbar. Eine Uhr wie in dem Dokument WO 2011/057149 A2 beschrieben, bietet aufgrund der zusätzlich sichtbaren Zahlen der Anzeige eine Vielzahl von Möglichkeiten der Passworteingabe nach dem erfindungsgemäßen Verfahren.

Bei Uhren mit digitaler Zeitanzeige wie bspw. in dem Dokument WO 2011/057149 A2 beschrieben sind üblicherweise die Stunden von "1" bis "12" und die Minuten von "1" bis "60" vorhanden. Für eine Passworteingabe anhand einer solchen auf einem Bildschirm abgebildeten Uhr kann es aber wünschenswert sein, ein vierstelliges Passwort mit den Zahlen "0" bis "9" pro Stelle einzugeben. Aufgrund der Dimensionierung der Uhr in dem Dokument WO 2011/057149 A2 ist es hier vom Platz her allerdings physikalisch nicht möglich, die Zahlen "0" bis "99" auf dem Band mit den Stunden unterzubringen. Eine Animation dieser Uhr ist diesen physikalischen Einschränkungen nicht unterworfen, sodass in einer Ausführung des erfindungsgemäßen Verfahrens beliebig viele Zeichen in beliebigen Abständen auf den Bändern, Scheiben, Würfeln oder Rollen der Anzeige abgebildet werden können.

Eine Vielzahl elektronischer Geräte mit Anzeigevorrichtung besitzen eine oder mehrere Funktionstasten, die zur Eingabe des Passworts anhand des erfindungsgemäßen Verfahrens verwendet werden können. Hier ist bspw. vorgesehen durch eine erste Aktion des Benutzers durch Drücken der Funktionstaste eines oder mehrere der Uhrenelemente in Bewegung zu versetzen. Durch weiteres Drücken der Funktionstaste werden nacheinander die Stellungen des Uhrenelements oder der Uhrenelemente registriert, die den Zahlen des Passworts entsprechen. Auch sind Funktionstasten bekannt, die neben der Funktion eines Drückers auch die Richtung eines Streichens anhand eines Fingers über der Taste registrieren können (siehe Smartphone Modell Desire Z des Herstellers HTC). Solche berührungsempfindliche Funktionstasten ermöglichen ein Scrollen und Antippen wie auf einem berührungsempfindlichen Bildschirm. Bspw. ist es möglich durch horizontales Streichen über die Funktionstaste verschiedene Elemente einer Uhr auszuwählen und durch vertikales Streichen diese dann zu verstellen. Die Verwendung einer berührungsempfindlichen Funktionstaste zur Passworteingabe nach dem erfindungsgemäßen Verfahren hat den Vorteil, dass keinerlei Spuren auf der Anzeigeeinrichtung hinterlassen werden, die zur Entschlüsselung des Passworts verwendet werden können. Die Spuren auf der berührungsempfindlichen Funktionstaste liegen alle übereinander, wodurch diese schwer zu entziffern sind. Alternativ kann auch ein Bereich auf dem Touchscreen zur Darstellung einer entsprechenden Taste verwendet werden. Diese auf dem Touchscreen abgebildete Funktionstaste dient dann zur Steuerung der dargestellten Uhr und somit zur Passworteingabe nach dem erfindungsgemäßen Verfahren. Anstelle einer Funktionstaste kann ebenso eine an das Gerät angeschlossene Maus zur Passworteingabe nach dem erfindungsgemäßen Verfahren verwendet werden. Das Drehen des Scrollrads der Maus kann hier dem Streichen über die Funktionstaste entsprechen, wobei das Klicken einer Maustaste oder das Drücken des Scrollrads dem Drücken der Funktionstaste entspricht. Auch die Verwendung von Trackballs oder Drehrädern, die direkt in das Gerät integriert sind ist zur Passworteingabe möglich.

Das Passwort kann aus einer oder mehreren Zahlen bestehen oder bei der Verwendung einer Datumsanzeige mit Buchstaben auch aus einem oder mehreren Buchstaben. Ebenso kann das Passwort aus Zahlen und Buchstaben zusammengesetzt sein. Buchstaben und Zahlen lassen sich unter dem Oberbegriff alphanumerische Zeichen zusammenfassen. Das Passwort im hier angegebenen Sinne kann folglich aus beliebigen alphanumerischen Zeichen in beliebiger Anzahl bestehen. Auch mit der aktuellen Zeit gekoppelte Passwörter sind möglich, wie z.B. eine Addition von zwei Zahlen mit den Werten von Stunde und Minute zum Zeitpunkt der Passworteingabe. Es können unterschiedliche Passwörter verwendet werden für die Ausführung unterschiedlicher passwortgeschützter Aktionen.

Bei einem Antippen anhand von einer Berührung oder einem Anklicken anhand von einer Maus oder einer Funktionstaste ist die Dauer der Benutzereingabe üblicherweise sehr kurz. Dadurch ist die Stellung beim Beginn der Benutzereingabe (z.B. der Herstellung des Kontakts mit dem Bildschirm) ungefähr gleich der Stellung beim Ende der Benutzereingabe (z.B. dem Lösen der Berührung mit dem Bildschirm). Hierbei kann vorgesehen sein, die Darstellung der Uhr nicht aufgrund der Benutzereingabe zu verändern. Dies ist z.B. sinnvoll, wenn die einzugebende Zahl des Passworts bereits von dem entsprechenden Element der Uhr angezeigt wird. Auch bei einem Halten der Berührung oder des Cursors der Maus an einer bestimmten Position auf dem Bildschirm kann die Darstellung der Uhr unverändert bleiben. Bei einem Halten einer bestimmten Position kann vorgesehen sein, dass die Datenverarbeitungseinrichtung der Stellung eines Uhrenelements nach einer gewissen Dauer eine Zahl des Passworts zuordnet. Somit kann auch dieselbe Zahl durch ein entsprechend langes Halten einer Berührung an einer bestimmten Position mehrmals nacheinander anhand von einer einzigen Benutzereingabe von der Datenverarbeitungseinrichtung registriert werden.

Die Bewegung eines Elements der Uhr in Folge der Berührung des Touchscreens zur Eingabe des Passworts kann auf eine Art erfolgen, die mit einem Verstellen der Zeit vergleichbar ist. Bei einer digitalen Uhr mit jeweils zwei Zahlen für Stunde und Minute kann ein vierstelliges Passwort bspw. durch ein Streichen in vertikaler Richtung über die einzelnen Zahlen eingegeben werden, wobei das Streichen eine Art Scrollen durch die Werte der jeweiligen Zahl ermöglicht. Alternativ können die einzelnen Zahlen angetippt werden, wodurch die Zahl um einen Wert weiter gestellt wird. Bei einer analogen Uhr mit Stundenzeiger, Minutenzeiger und Sekundenzeiger kann ein aus drei Zahlen bestehendes Passwort durch ein Ziehen der drei Zeiger zu der jeweiligen Winkelstellung geführt werden, die dem jeweiligen Wert des Passworts auf der Skala des Zifferblatts entspricht. Bei diesen beiden Methoden der Passworteingabe ist jedem durch die Berührung des Touchscreens bewegten Element der Uhr eine Zahl des Passworts zugeordnet und das Passwort ist nach der Eingabe sichtbar.

Die Bewegung eines Elements der Uhr in Folge der Berührung des Touchscreens zur Eingabe des Passworts kann aber auch auf eine Art erfolgen die mit dem Einstellen einer Zahlenkombination bei einem mechanischen Zahlenkombinationsschloss mit Drehscheibe wie bspw. bei Tresoren vorzufinden vergleichbar ist. Bei einer analogen Uhr kann ein Zeiger der Uhr verwendet werden, um die Zahlen des Passworts nacheinander auf einer Skala des Zifferblatts einzustellen. Umgekehrt kann auch das Zifferblatt zusammen mit der Skala gedreht werden wobei die Zahlen des Passworts dann bspw. durch die Übereinstimmung mit einem Zeiger oder einer Markierung auf der Lünette eingestellt werden. Auch die Lünette mit einer entsprechenden Markierung kann zum Einstellen des Passworts um die Skala der Uhr herum rotiert werden.

Auf einer digitalen Uhr kann die Passworteingabe ähnlich wie bei einem Spielautomaten erfolgen, bei welchem mehrere Rollen bzw. Räder mit aufgedruckten Zahlen nebeneinander angeordnet sind und aus einer Rotation jeweils in einer bestimmten Stellung gestoppt werden. Hier entsprechen die einzelnen Rollen bzw. Räder den Elementen der Uhr. Ausgehend von einer Darstellung der Uhr werden bspw. die Zahlen der Stunde und Minute durch eine Benutzereingabe oder automatisch mit einer definierten Verzögerung nach der Anzeige des Login-Bildschirms in Bewegung versetzt. Die Zahlen werden dann durch eine weitere Benutzereingabe auf genau der Stellung des Passworts gestoppt. Nach dem Stoppen und Registrieren der einzelnen Zahlen des Passworts ist entweder die Zahl des Passworts auf der Anzeige zu sehen, oder die Räder bzw. Rollen setzten ihre Bewegung fort, sodass das eingegebene Passwort nicht sichtbar ist.

Die Passworteingabe kann auf einer analogen Uhr auch ähnlich dem Wählen einer Telefonnummer auf einem Telefon mit Wählscheibe erfolgen. Hier wird ein Element der Uhr anhand von einer Benutzereingabe in eine Stellung rotiert, die einer Zahl des Passworts entspricht. Nachdem die entsprechende Zahl des Passworts registriert wurde kann sich das Uhrenelement in die ursprüngliche Stellung zurückbewegen, in welcher wieder die aktuelle Uhrzeit angezeigt wird. Zur Eingabe der nächsten Zahlen des Passworts wird dieser Vorgang wiederholt, wobei das Uhrenelement jeweils zu den Stellungen bewegt wird, die den einzugebenden Zahlen des Passworts entsprechen.

Um ein Element der Uhr anhand einer Benutzereingabe zu bewegen, ist vorgesehen den Maus-Cursor oder die Berührung so auf dem Bildschirm zu positionieren, dass die Position mit dem zu bewegenden Element der Uhr übereinstimmt. Ein Zeiger der Uhr kann also bspw. in der Mitte oder am Ende angeklickt oder berührt und somit bewegt werden. Bei einem kreisrunden Element, wie der Skala der Uhr bestehen folglich viele mögliche Positionen auf dem Bildschirm, um die Skala für eine Bewegung anzuklicken oder zu berühren. Um das Auswählen eines Uhrenelements zu vereinfachen, kann aber auch eine das Uhrenelement einschließende Fläche zu dem Element hinzu definiert werden. Bei einem dünnen Zeiger ist es somit nicht notwendig, den Zeiger für eine Bewegung exakt anzuklicken oder zu berühren. Bei einer runden analogen Uhr, die nicht den gesamten Touchscreen ausfüllt, kann die Berührung des Uhrengehäuses oder der Lünette erleichtert werden, indem auch die Flächen um die Uhr herum zur Bewegung des Uhrengehäuses oder der Lünette verwendet werden können. Dies hat auch den Vorteil, dass bei einer Berührung mit einem Finger, die Uhr weniger von dem Finger verdeckt wird, da der Finger auf dem Touchscreen weiter von der Uhr entfernt ist.

In einer Ausbildung des erfindungsgemäßen Verfahrens ist vorgesehen, die Bewegung eines Uhrenelements durch eine Benutzereingabe auch dann fortzusetzen, wenn die Position der Benutzereingabe nicht mehr mit dem Uhrenelement übereinstimmt. Wird bspw. ein Minutenzeiger anhand von einer Berührung mit einem Touchscreen ausgewählt und verstellt, dann kann die Berührung auch von der Uhr wegbewegt werden, ohne dass die Kontrolle über den Minutenzeiger verloren geht. Somit kann der ausgewählte Minutenzeiger durch ein Verschieben der Berührung entlang gerader oder gekrümmter Linien von Positionen außerhalb der Uhr rotiert bzw. verstellt werden. Dies hat den Vorteil, dass der Minutenzeiger bzw. die Uhr weniger von der Berührung verdeckt wird. In einer ähnlichen Ausbildung des erfindungsgemäßen Verfahrens kann eine Element der Uhr durch eine erste Benutzereingabe ausgewählt werden, um dann durch eine oder mehrere weitere Benutzereingaben an einer anderen Stelle auf dem Bildschirm verstellt zu werden. Bei einer Uhr mit verstellbaren Stunden-, Minuten- und Sekundenzeigern kann bspw. zuerst der Sekundenzeiger angetippt und dadurch ausgewählt werden und darauffolgend durch eine weitere Berührung mit dem Bildschirm außerhalb der Uhr verstellt werden. Nach dem Verstellen des Sekundenzeigers können dann die Minuten- und Stundenzeiger auf dieselbe Art und Weise verstellt werden.

In einer weiteren Ausbildung des erfindungsgemäßen Verfahrens ist vorgesehen, ausschließlich ein bestimmtes Element der Uhr wie bspw. die Skala einer analogen Uhr durch eine Benutzereingabe bewegen zu können. Da hierbei keine anderen Elemente der Uhr bewegt werden können, ist es prinzipiell nicht von Bedeutung wo auf dem Bildschirm die Berührung zur Bewegung des bewegbaren Elements platziert ist. Es kann somit der komplette Bildschirm zur Registrierung einer Berührung verwendet werden, anhand welcher dann eine Zahl des Passworts eingegeben wird.

In welchem Umfang sich ein Uhrenelement bewegen lässt, kann in den Einstellungen zur Passworteingabe definiert sein. So kann bspw. festgelegt sein, dass ein Minutenzeiger nur um die von der Zeitanzeige vorgegebene Rotationsachse gedreht werden kann. Nachdem dieser Minutenzeiger bspw. anhand von einer Berührung mit dem Bildschirm zum Verstellen ausgewählt wurde, kann ein Verschieben der Berührung entlang gerader oder gekrümmter Linien immer nur eine Rotation des Minutenzeigers erzeugen. Alternativ kann auch festgelegt sein, dass ein Uhrenelement nicht rotiert sondern nur verschoben werden darf. Das Verschieben eines Minutenzeigers führt dazu, dass dieser seine Position auf der Uhr verlässt und sozusagen demontiert wird. Mit dem einen oder dem anderen Ende des demontierten Minutenzeigers können dann die Zahlen des Passworts nacheinander bspw. auf der Stundenskala ausgewählt werden.

Die Umkehrung der Bewegungsrichtung eines Elements der Uhr kann eine Zahl des Passworts ergeben, sodass ein mehrstelliges Passwort eingegeben werden kann, ohne die Berührung mit dem Touchscreen zu lösen. Hierbei wird der Stellung des Elements, bei welcher die Bewegungsrichtung geändert wird, ein Zeichen des Passworts zugeordnet. Ebenso kann aber auch die Stellung des Elements beim Loslösen der Berührung des Touchscreens dazu dienen, die einzugebende Zahl des Passworts zu definieren. Eine weitere Alternative stellt das Halten der Berührung bei einer bestimmten Stellung des Elements der Uhr zur Eingabe einer Zahl des Passworts dar. Auch bei einer digitalen Uhr kann ein Element der Anzeige verwendet werden, um nacheinander mehrere Zahlen des Passworts einzugeben.

Es kann vorgesehen sein, dass das Uhrenelement während einer für eine Zeitdauer anhaltenden und nicht veränderten Berührung der Anzeigeeinrichtung in einer bestimmten Darstellung der Uhr fixiert wird und dieser bestimmten Darstellung ein alphanumerisches Zeichen des Passworts zugeordnet wird. Alternativ ist nach einer Fortbildung vorgesehen, dass die Darstellung der Uhr bei einem Lösen der Berührung von der Anzeigeeinrichtung einem alphanumerischen Zeichen des Passworts zugeordnet wird.

Wenn das Passwort mehrere alphanumerische Zeichen umfasst, kann eine zeitliche Reihenfolge der Benutzereingabe und der weiteren Benutzereingabe die Reihenfolge des alphanumerischen Zeichens und des weiteren alphanumerischen Zeichens in dem Passwort festlegen. Wenn bei einer digitalen Uhr also zuerst die Minute verstellt wird, gefolgt von der Stunde und danach der Sekunde, kann das Passwort aus den eingestellten Werten von Minute, Stunde und Sekunde in genau der Reihenfolge bestehen. Alternativ kann die Reihenfolge der alphanumerischen Zeichen des Passworts der räumlichen Anordnung der Elemente der Uhr entsprechen. Bei einer digitalen Uhr mit der Stunde links, der Minute in der Mitte und der Sekunde rechts kann dementsprechend das Passwort aus den eingestellten Werten von Stunde, Minute und Sekunde in genau der Reihenfolge bestehen.

Die Überprüfung des Passworts kann während der Passworteingabe fortlaufend durch das elektronische Gerät erfolgen. Ebenso kann ein zusätzlicher Bedienknopf auf dem Touchscreen angezeigt werden, bei dessen Betätigung die bisherige Eingabe des Passworts überprüft wird. Alternativ ist vorgesehen, dass die Überprüfung des anhand eines Elements der angezeigten Uhr einzugebenden Zeichens des Passworts erst erfolgt, nachdem die Eingabe des nächstens Zeichens des Passworts an einem weiteren Element der Uhr begonnen hat. Hier wird nicht Bewegung des Elements, sondern die endgültige Stellung des Elements zur Definition des Zeichens des Passworts verwendet. Auch kann vorgesehen sein, bspw. nach dem Verstellen der Zeiger einer analogen Uhr anhand von der Berührung mit dem Touchscreen einen oder mehrere Kreise um die Uhr zu Zeichnen, um das Registrieren des eingestellten Passworts auszulösen. Solche Berührungen können neben der Triggerfunktion zum Registrieren des Passworts auch dem Nutzen dienen, die vorher zum Einstellen des Passworts erzeugten Spuren auf dem Bildschirm zu verwischen. Nach korrekter Eingabe des Passworts kann eine passwortgeschützte Aktion direkt oder mit einer definierten Verzögerung von der Datenverarbeitungseinrichtung ausgeführt werden.

Es ist möglich neben der Uhr einen oder mehrere Auswahlknöpfe auf der Anzeigeeinrichtung anzuzeigen, welche erst nach erfolgreicher Eingabe des Passworts bei Betätigung zu der Ausführung einer durch das Passwort geschützten Aktion führen. Vor erfolgreicher Eingabe des Passworts kann die Betätigung solcher Auswahlknöpfe zu der Ausführung einer nicht passwortgeschützten Aktion führen, wie bspw. einer Anzeige der Information, dass erst nach der korrekten Eingabe des Passworts die passwortgeschützte Aktion ausgeführt werden kann. Hier kann allerdings die Änderung der nach Betätigung solcher Auswahlknöpfe auszuführenden Aktionen an sich bereits als eine passwortgeschützte Aktion betrachtet werden.

Passwortgeschützte Aktionen im hier angegebenen Sinne können grundsätzlich jedwede von der Datenverarbeitungseinrichtung ausführbare Aktionen betreffen. Als Beispiele seien hier das Entsperren des Displays, bzw. das Aufheben der Displaysperre, die Anzeige sensibler Daten wie Email-Postfächer oder Kalender oder das Öffnen eines Türschlosses genannt. Wie bereits erwähnt können passwortgeschützte Aktionen aber auch das einfache Anzeigen eines oder mehrerer Bedienfelder darstellen, anhand welcher der Benutzer z.B. auf sensible im elektronischen Gerät gespeicherte Daten zugreifen kann.

Es ist vorgesehen, durch die Eingabe unterschiedlicher Passwörter unterschiedliche Aktionen ausführen zu lassen. Bspw. wird nach der Eingabe eines Passworts das Email-Postfach angezeigt, wobei der Kalender nach der Eingabe eines anderen Passworts angezeigt wird. Die Ausführung der passwortgeschützten Aktionen kann mit aktivierter Displaysperre erfolgen, ohne dass die Displaysperre aufgehoben wird. Somit können bei aktivierter Displaysperre nur die Funktionen verwendet werden, die durch die Ausführung der passwortgeschützten Aktion zur Verfügung gestellt wurden. Zur Verwendung weiterer Funktionen muss dann wiederum ein weiteres Passwort eingegeben werden. Des Weiteren ist vorgesehen, das erfindungsgemäße Verfahren im entsperrten Zustand des Geräts, also mit deaktivierter Displaysperre zu verwenden. Im entsperrten Zustand des Geräts sind bis auf die passwortgeschützten Aktionen üblicherweise alle anderen Funktionen des Geräts verwendbar. Zur Ausführung einer passwortgeschützten Aktion im entsperrten Zustand des Geräts muss dann wiederum das entsprechende Passwort über die auf dem Touchscreen angezeigte Uhr eingegeben werden.

Die Eingabe unterschiedlicher Passwörter kann auch zur Identifizierung unterschiedlicher Benutzer des elektronischen Gerätes verwendet werden. Hierbei ist jedem Benutzer des Geräts ein eigenes Passwort zugeordnet anhand welchem das Gerät die Benutzer identifizieren kann. Nach Eingabe eines Passworts werden dann die Daten, Funktionen und Programme des entsprechenden Benutzers geladen, wobei die Daten, Funktionen und Programme von anderen Nutzern nicht zugängig sind. Auch kann ein Administrator vorgesehen sein, der nach Eingabe eines möglichst sicheren Passworts auf alle Daten, Programme und Funktionen des Geräts zugreifen kann.

Nach erfolgreicher Eingabe des Passworts kann die Uhr auf dem Bildschirm angezeigt bleiben und auf die aktuelle Zeit zurückgestellt werden. Auch kann die passwortgeschützte Aktion in einem neuen Fenster der Anzeige ausgeführt werden, sodass nach Schließen des neuen Fensters wieder das Fenster mit der Uhr angezeigt wird. Die Uhr kann nach erfolgter Passworteingabe auch ausgeblendet werden, z.B. um auf dem Bildschirm Platz zu machen für die Ausführung der passwortgeschützten Aktion.

Die Definition eines Passworts, welches vor der Ausführung einer bestimmten zu schützenden Aktion eingegeben werden soll, kann auf unterschiedliche Art und Weise erfolgen. In einem Definitionsmodus des elektronischen Geräts kann das Passwort bspw. über eine auf dem Touchscreen abgebildete Tastatur direkt in eine dafür vorgesehene Maske eingetragen werden. Zur Bestätigung des Passworts wäre es bei dieser Methode der Definition sinnvoll das Passwort nochmals einzugeben, allerdings an der gleichen Uhr, welche zur Abfrage des Passworts zur Ausführung der passwortgeschützten Aktion verwendet wird. Alternativ kann die Definition des Passworts auch direkt über die Eingabe an der gleichen Uhr erfolgen, welche zur Abfrage des Passworts zur Ausführung der passwortgeschützten Aktion verwendet wird. Hier wäre es wiederum sinnvoll das Passwort zur Überprüfung der Definition über die Uhr zusätzlich auf dem Touchscreen darzustellen.

Bei der Definition des Passworts können zusätzliche Optionen festgelegt werden, welche sich auf die Sicherheit des Passwortschutzes auswirken. Die Zuordnung bestimmter Elemente der Uhr zu bestimmten Zahlen oder Ziffern legt bspw. fest, welche Elemente in welcher Reihenfolge zur Eingabe welcher Zeichen des Passworts verwendet werden müssen. Mit der zeitlichen Reihenfolge kann definiert werden, welche Zeichen des Passworts an welchen Elementen der Uhr vor der Eingabe anderer Zeichen einzugeben sind. Mit der räumlichen Reihenfolge hingegen werden die Zeichen des Passworts den Elementen der Uhr zugeordnet. Auch kann definiert werden, welche Elemente der Uhr zusätzlich bewegbar sind, obwohl sie nicht zur Eingabe des Passworts verwendet werden müssen. Letzteres hat zur Folge, dass die auf dem Touchscreen hinterlassenen Spuren nicht eindeutig der Eingabe eines Zeichens des Passworts anhand eines bestimmten Elements der Uhr zugeordnet werden können. So kann bspw. die von der Uhr angezeigte Uhrzeit vor oder nach der Passworteingabe verändert werden.

Weitere Optionen zur Passworteingabe können die Art und Dauer der Berührung auf dem Touchscreen darstellen, welche zur Eingabe eines alphanumerischen Zeichens des Passworts notwendig sind. Des Weiteren kann eine Zeitdauer definiert werden, innerhalb welcher beginnend von der ersten Berührung des Touchscreens das Passwort eingegeben werden kann. Zusätzlich dazu sollte auch eine Zeitdauer definiert werden innerhalb welcher bei einmaliger oder mehrmaliger falscher Eingabe des Passworts eine erneute Eingabe nicht möglich ist. Auch die Genauigkeit mit welcher die alphanumerischen Zeichen des Passworts eingegeben werden müssen kann als Option definiert werden, z.B. plus minus zwei Minuten auf der Minutenskala. Um eine automatische Passworteingabe für den Fall, dass die aktuelle Uhrzeit dem Passwort entspricht zu vermeiden, kann des Weiteren festgelegt werden, dass die Passworteingabe erst nach der Bewegung der Elemente durch Berührung mit dem Touchscreen erfolgen kann.

Für den Fall, dass nur eine geringe Sicherheit vor unbefugtem Zugriff benötigt wird, kann das erfindungsgemäße Verfahren auch in Kombination mit einer interaktiven, analogen Uhr gemäß Dokument DE 102010020466 A1 verwendet werden. Bei einer Ausführungsvariante dieser Uhr werden die Zeiger zum Ablesen der aktuellen Zeit zusammen mit der Lünette von Hand gedreht. Die Winkelstellung bei der eine Markierung auf der Lünette mit einem der Zeiger übereinstimmt entspricht der aktuellen Zeit bzgl. der Zeiteinheit des Zeigers. Bei Verwendung einer solchen interaktiven, analogen Uhr kann die aktuelle Uhrzeit als Passwort definiert werden, welche zur Ausführung der passwortgeschützten Aktion abgelesen werden muss. Um die passwortgeschützte Aktion ausführen zu können, muss also bekannt sein wie die aktuelle Zeit auf der interaktiven, analogen Uhr gelesen wird. Da durch das Verstellen der Zeiger hier nicht zwangsläufig die anzuzeigende Zeit verstellt wird, ist es nicht notwendig, die Uhr nach korrekter Passworteingabe wieder zurückzustellen.

Bei dem erfindungsgemäßen Verfahren können die Spuren der Berührung auf dem Touchscreen nicht ohne Weiteres zur Entschlüsselung des Passworts verwendet werden. Dies liegt bei einem mehrmaligen Antippen sowie einem Hin- und Herziehen eines Elements der Uhr daran, dass die Berührungen auf dem Touchscreen aufeinander verlaufen und somit die jeweils obere Spur die darunterliegende verwischt. Da zu unterschiedlichen Zeitpunkten die Uhr unterschiedliche Uhrzeiten anzeigt, sind auch unterschiedliche Benutzereingaben zur Passworteingabe notwendig. Die auf dem Bildschirm hinterlassenen Spuren hängen somit von der Uhrzeit ab zu welcher das Passwort eingegeben wurde. Bei einem Verstellen der angezeigten Zeit in die alphanumerischen Zeichen des Passworts wäre für eine Entschlüsselung des Passworts anhand der Spuren auf dem Touchscreen folglich die Kenntnis über die genaue Uhrzeit bei welcher das Passwort eingegeben wurde notwendig. Auch gibt es mehrere Möglichkeiten zu einer bestimmten Uhrzeit ein bestimmtes Passwort einzugeben, was die Entschlüsselung der Spuren weiterhin erschwert. Bei einer Passworteingabe über eine Gangreserveanzeige einer Uhr, welche den Ladezustand der Batterie des Geräts anzeigt, hängen die Spuren auf dem Bildschirm von dem Ladezustand der Batterie zum Zeitpunkt der Passworteingabe ab. Bei einer Passworteingabe anhand einer Funktionstaste werden des Weiteren keine Spuren auf dem Bildschirm hinterlassen, die zur Entschlüsselung des Passworts verwendet werden können.

Neben der erhöhten Sicherheit des Passwortschutzes bietet das erfindungsgemäße Verfahren eine doppelte Funktionalität der auf dem Touchscreen dargestellten Uhr. Zum Einen dient die Uhr der Zeitanzeige und zum Anderen zur Eingabe des Passworts. Da die notwendige Fläche zur Anzeige einer für die Passworteingabe vorgesehenen Tastatur einen Großteil des Bildschirms in Anspruch nimmt, wird durch die doppelte Funktionalität der Uhr erheblich Platz gespart. So können bei dem erfindungsgemäßen Verfahren z.B. auf Smartphones analoge Uhren in einer zum Ablesen der Zeit komfortablen Größe abgebildet werden. Das erfindungsgemäße Verfahren ermöglicht somit auch die Darstellung beliebiger Armbanduhren im Maßstab 1:1 und größer auf dem zur Passworteingabe vorgesehenen Bildschirm.

Die primäre kommerzielle Verwertbarkeit des erfindungsgemäßen Verfahrens besteht in der Passworteingabe auf elektronischen Geräten. Eine weitere kommerzielle Verwertbarkeit stellt die Verwendung von Uhrendesigns für eine über die Zeitanzeige hinausgehende Funktion besonders auf Smartphones und Tablet-Computern dar. Viele Hersteller von Armbanduhren nutzen Anwendungsprogramme auf Smartphones und Tablet-Computern, sog. Apps, für Marketingzwecke ihrer Produkte. Solche Apps funktionieren größtenteils wie verkleinerte Versionen der Herstellerwebseite, wodurch sich die Integration in das Gerät auf das Darstellen der Seiteninhalte beschränkt. Dies hat den Nachteil, dass solche Apps dem Konsumenten nicht mehr Nutzen bieten als die Webseiten der Hersteller, wodurch schnell das Interesse an der App verloren gehen kann. Das erfindungsgemäße Verfahren hingegen ermöglicht eine weitergehende Integration der App in die Funktionsweise des Geräts, sodass die Uhren des Herstellers neben der Zeitanzeige z.B. auch die Funktion des Schutzes der im Smartphone gespeicherten Daten vor unbefugten Zugriffen bietet.

Bei einigen innovativen Uhren besteht der Hauptreiz darin, dass sich das Erscheinungsbild der Anzeige mit der Zeit entweder kontinuierlich oder abrupt verändert. Solche Veränderungen geschehen allerdings so langsam oder selten, dass beim Demonstrieren des Mechanismus z.B. auf Messen die Zeit verstellt werden muss. Als Besitzer solcher Uhren ist man somit ebenso dazu verführt, die Zeit zu verstellen, um endlich die Veränderung der Anzeige erleben zu können. Das Verstellen der Zeit bei einer bereits korrekt eingestellten Uhr hat allerdings wenig funktionellen Sinn. Bei der Integration solch innovativer Uhren in Smartphones oder Tablet-Computer anhand des erfindungsgemäßen Verfahrens hat das Verstellen der Zeit aber die Funktion der Passworteingabe. Somit erhöht sich die Attraktivität einer entsprechenden App, was zu einer verbesserten kommerziellen Verwertbarkeit der App als Marketing-Instrument führen kann.

### Beschreibung bevorzugter Ausführungsbeispiele

Die Erfindung wird im Folgenden anhand von bevorzugten Ausführungsbeispielen unter Bezugnahme auf Figuren näher erläutert.
Fig. 1 zeigt den prinzipiellen Ablauf des erfindungsgemäßen Verfahrens aus der Sicht des Benutzers eines elektronischen Geräts mit Touchscreen.
Fig. 2 zeigt ein Diagramm der in der Datenverarbeitungseinrichtung ablaufenden Prozesse des erfindungsgemäßen Verfahrens.
Fig. 3 zeigt sequentiell jeden Schritt der Passworteingabe aus Fig. 1(b).
Fig. 4 zeigt sequentiell die Passworteingabe durch Drehung der Lünette zusammen mit Zifferblatt und Skala einer auf einem Touchscreen abgebildeten analogen Uhr.
Fig. 5 zeigt sequentiell die Passworteingabe durch Verstellen der Zeit auf zwei auf einem Touchscreen abgebildeten analogen Uhren.
Fig. 6 zeigt sequentiell die Passworteingabe anhand einer digitalen Uhr mit Anzeige der Stunde und Minute.
Fig. 7 zeigt eine Ausführungsvariante des erfindungsgemäßen Verfahrens ähnlich der in Fig. 6, mit dem Unterschied, dass in Fig. 7 jede Zahl der digitalen Uhr separat eingestellt werden kann.
Fig. 8 zeigt sequentiell die Passworteingabe einer Ausführungsvariante des erfindungsgemäßen Verfahrens mit einer digitalen Uhr mit Stunde, Minute und Sekunde, sowie einer Datumsanzeige.
Fig. 9 zeigt das erfindungsgemäße Verfahren in einer Ausführungsvariante in Kombination mit einer interaktiven, analogen Uhr gemäß Dokument DE 102010020466 A1.
Fig. 10 zeigt eine Ausführungsvariante des erfindungsgemäßen Verfahren ähnlich der in Fig. 4 dargestellten, mit dem Unterschied, dass zur Passworteingabe die Minutenindexe mit dem Sekundenzeiger in Übereinstimmung gebracht werden.
Fig. 11 zeigt sequentiell die Passworteingabe durch Drehung der Lünette zusammen mit Zifferblatt und Skala einer auf einem Touchscreen abgebildeten analogen Uhr, welche sich nach Eingabe des Passworts auf die aktuelle Uhrzeit zurückstellt.
Fig. 12 zeigt sequentiell die Passworteingabe durch Drehung der Lünette zusammen mit Zifferblatt und Skala sowie durch Antippen einer auf einem Touchscreen abgebildeten analogen Uhr, welche sich nach Eingabe des Passworts auf die aktuelle Uhrzeit zurückstellt.
Fig. 13 zeigt die Ausführungsvariante aus Fig. 6 mit dem Unterschied, dass sich die Uhr nach Eingabe des Passworts auf die aktuelle Uhrzeit zurückstellt.
Fig. 14 zeigt die Ausführungsvariante aus Fig. 13 mit dem Unterschied, dass das Passwort nur über die Minutenanzeige eingegeben wird.
Fig. 15 zeigt sequentiell die Passworteingabe durch Antippen einer auf einem Touchscreen abgebildeten digitalen Uhr, ähnlich der Ausführungsvariante aus Fig. 7 allerdings mit dem Unterschied, dass sich die Elemente der Uhr zur Passworteingabe fortwährend bewegen.
Fig. 16 zeigt sequentiell Momentaufnahmen bei der Passworteingabe einer Ausführung des erfindungsgemäßen Verfahrens auf einem elektronischen Gerät mit einem Bedienknopf.
Fig. 17 zeigt sequentiell Momentaufnahmen bei der Passworteingabe einer Ausführung des erfindungsgemäßen Verfahrens mit einer Uhr mit Gangreserveanzeige.
Fig. 18 zeigt sequentiell Momentaufnahmen bei der Passworteingabe einer Ausführung des erfindungsgemäßen Verfahrens mit einer Uhr mit analoger Anzeige der Minute und digitaler Anzeige der Stunde.
Fig. 19 zeigt sequentiell die Passworteingabe durch Drehung der Lünette einer auf einem Touchscreen abgebildeten analogen Uhr, sowie darauffolgend durch Antippen der Stundenzahlen, welche den weiteren Zahlen des Passworts entsprechen.
Fig. 20 zeigt Sequenzen einer Ausführung des erfindungsgemäßen Verfahrens, bei welcher zur Eingabe der ersten Zahl des Passworts mehrere Berührungen des Touchscreen notwendig sind, wobei durch die erste Berührung die auf dem Touchscreen abgebildete Uhr verstellt wird.

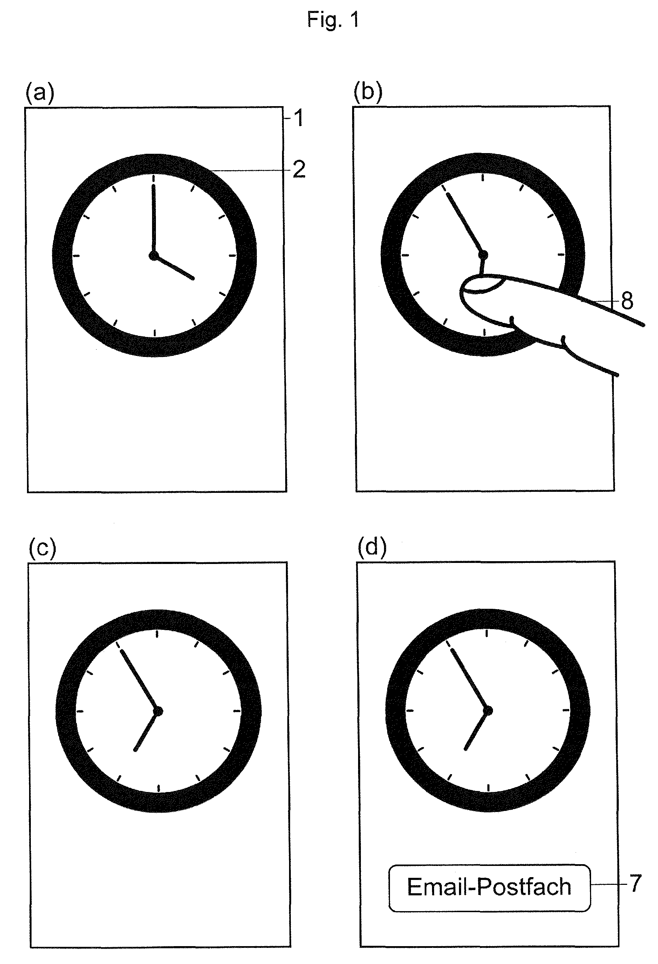

In Fig. 1 ist der prinzipielle Ablauf des erfindungsgemäßen Verfahrens aus der Sicht des Benutzers des elektronischen Geräts anhand von vier zeitlich aufeinander folgenden Momentaufnahmen eines Touchscreens dargestellt. Fig. 1(a) zeigt die Ausgangslage des Verfahrens mit einer auf dem Touchscreen 1 dargestellten Uhr 2 zur Uhrzeit 16:00 Uhr. In Fig. 1(b) wurde mit dem Finger 8 des Benutzers des elektronischen Geräts eine Berührung mit dem Touchscreen 1 hergestellt und Elemente der Uhr werden entsprechend einer Passworteingabe bewegt. In Fig. 1(c) ist die verstellte Uhr 2 nach der Passworteingabe dargestellt, wobei die Uhr 2 in dieser Ausführungsvariante des erfindungsgemäßen Verfahrens das für die Ausführung der passwortgeschützten Aktion notwendige Passwort anzeigt. Aufgrund der korrekten Eingabe des Passworts wurde in Fig. 1(d) die passwortgeschützte Aktion ausgeführt, welche darin besteht, ein Bedienfeld 7 auf dem Touchscreen 1 anzuzeigen, welches den Zugriff auf das Email-Postfach ermöglicht.

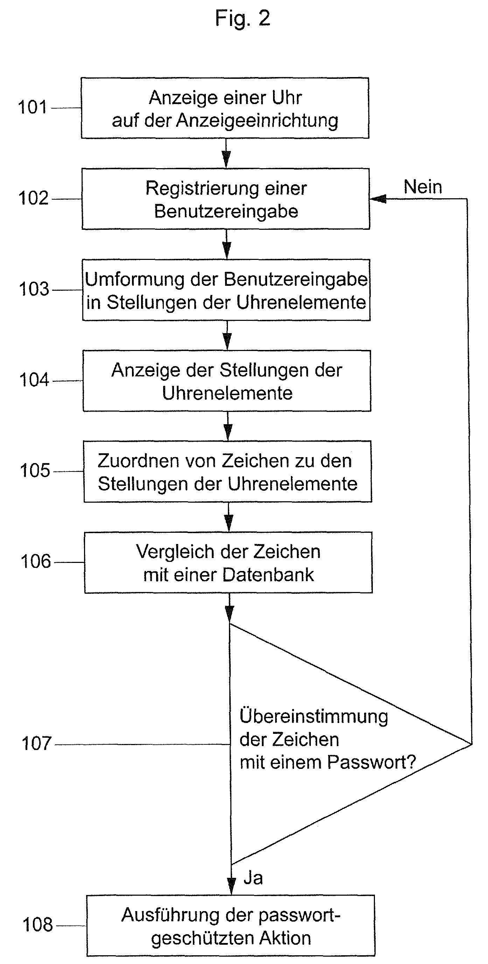

Der prinzipielle Prozessablauf einer Ausführung des erfindungsgemäßen Verfahrens ist anhand eines Blockdiagramms in Fig. 2 dargestellt. Das Verfahren beginnt mit dem Prozess 101, in welchem eine Uhr auf der Anzeigeeinrichtung angezeigt wird. Im darauffolgenden Prozess 102 wird eine Benutzereingabe registriert mit Attributen wie Position auf der Anzeigeeinrichtung und Art der Benutzereingabe (z.B. Tippen, Klicken, Ziehen, Scrollen oder Streichen). Die registrierte Benutzereingabe wird in Prozess 103 mit der angezeigten Uhr in Verbindung gebracht und in Stellungen bzw. Darstellungen der Uhrenelemente umgeformt bzw. übersetzt. Die somit erhaltenen Stellungen der Uhrenelemente werden im Prozess 104 auf dem Touchscreen wiedergegeben und im Prozess 105 in alphanumerische Zeichen des Passworts überführt. Die Überführung der Stellungen der Uhrenelemente in Zeichen des Passworts in Prozess 105 erfolgt je nach Einstellung, bspw. anhand den Winkelstellungen der Uhrenelemente auf einer Skala einer analogen Uhr. Im Prozess 106 werden die im vorangehenden Prozess 105 ermittelten alphanumerischen Zeichen mit dem oder den in einer Datenbank gespeicherten Passwörtern verglichen. Bei einer Übereinstimmung der alphanumerischen Zeichen mit einem Passwort führt Prozess 107 zur Ausführung der mit dem Passwort geschützten Aktion in Prozess 108. Wenn die alphanumerischen Zeichen nicht mit einem Passwort aus der Datenbank übereinstimmen führt Prozess 107 zurück zu Prozess 102, um weitere Benutzereingaben zu registrieren. Durch mehrmaliges Durchlaufen des Blockdiagramms werden die nacheinander eingegebenen alphanumerischen Zeichen des Passworts registriert.

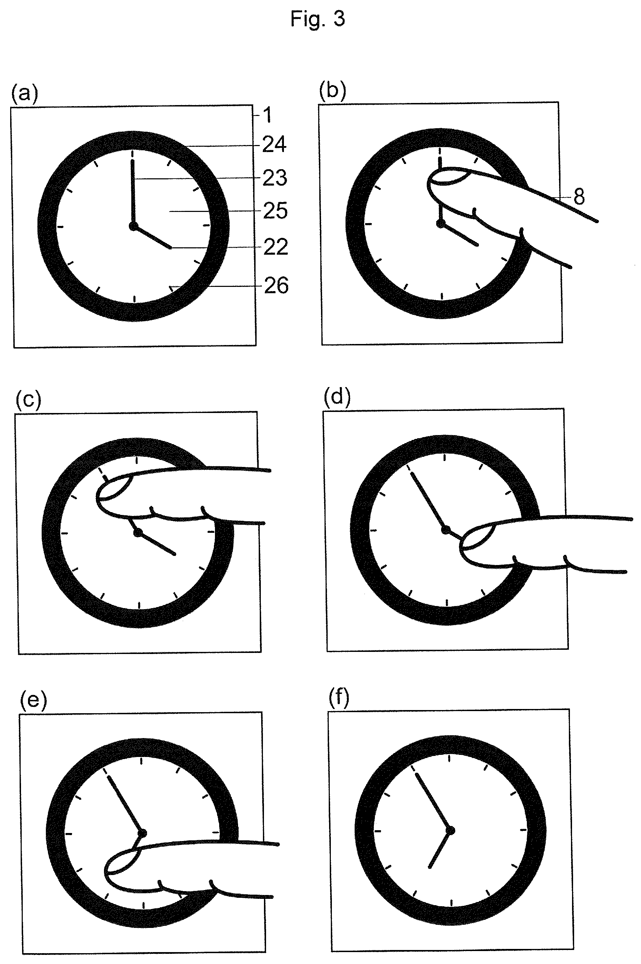

In Fig. 3 ist die Passworteingabe aus Fig. 1(b) anhand von sechs zeitlich aufeinander folgenden Momentaufnahmen detailliert dargestellt. Fig. 3(a) zeigt den Touchscreen 1 mit einer analogen Uhr mit einer 12 Stunden und 60 Minuten Skala zur Uhrzeit 16 Uhr. Die analoge Uhr besteht aus den Elementen Stundenzeiger 22, Minutenzeiger 23, Gehäuse bzw. Lünette 24, sowie Zifferblatt 25 mit Stundenskala 26.

Die Einstellungen zur Passworteingabe bei der Ausführungsvariante des erfindungsgemäßen Verfahrens in Fig. 3 erlauben das Verstellen der Uhrenelemente Stundenzeiger 22 und Minutenzeiger 23. Alle anderen Elemente der Uhr sind in dieser Ausführung nicht verstellbar. Des Weiteren können die beiden Zeiger 22, 23 unabhängig voneinander verstellt werden, sodass sich bspw. beim Verstellen des Stundenzeigers 22 nicht der Minutenzeiger 23 mitbewegt. Mit beiden Zeigern sollen Werte auf der Stundenskala eingestellt werden, sodass sich ein zweistelliges Passwort ergibt mit jeweils 12 möglichen Werten pro Stelle. Zuerst soll der Minutenzeiger 23 so verstellt werden, dass er auf Stunde "11" zeigt und danach soll der Stundenzeiger 22 auf Stunde "7" gestellt werden. Das einzustellende Passwort in Fig. 3 lautet somit "11-07" mit der Bedingung, dass die erste Zahl mit dem Minutenzeiger 23 und die zweite Zahl mit dem Stundenzeiger 22 einzustellen ist. Die passwortgeschützte Aktion wird nach korrekter Einstellung des Passworts, sowie nach Lösen der Berührung mit dem Touchscreen 1 mit einer definierten kurzen Zeitverzögerung von bspw. einer Sekunde ausgeführt.

In Fig. 3(b) ist ein Finger 8 des Benutzers des elektronischen Geräts mit Touchscreen abgebildet, wobei der Finger 8 den Touchscreen 1 an der Stelle des Minutenzeigers 23 berührt. Von Fig. 3(b) nach Fig. 3(c) wurde der Finger 8 bei anhaltender Berührung mit dem Touchscreen nach links gezogen, wodurch der Minutenzeiger 23 entsprechend der Bewegung des Fingers 8 entgegen dem Uhrzeigersinn gedreht wird. Ausgehend von der ursprünglichen Stellung des Minutenzeigers 23 in Fig. 3(a) und (b) wurde der Minutenzeiger 23 um 5 Minuten zurückgestellt. Die Stellung des Minutenzeigers 23 befindet sich somit in Fig. 3(c) auf 55 Minuten bzw. auf Stunde "11". Von Fig. 3(c) nach Fig. 3(d) wurde die Berührung des Fingers 8 mit dem Touchscreen 1 gelöst, um dann den Touchscreen 1 an der Stelle des Stundenzeigers 22 zu berühren. Von Fig. 3(d) nach Fig. 3(e) wurde der Finger 8 bei anhaltender Berührung mit dem Touchscreen so weit nach links bewegt, dass der Stundenzeiger 22 auf Stunde "7" zeigt. In Fig. 3(f) ist der Touchscreen 1 mit der verstellten Uhr nach Lösung der Berührung des Fingers 8 abgebildet. Das einzustellende Passwort "11-07" ist erfolgreich eingegeben worden, sodass nun die passwortgeschützte Aktion ausgeführt wird.

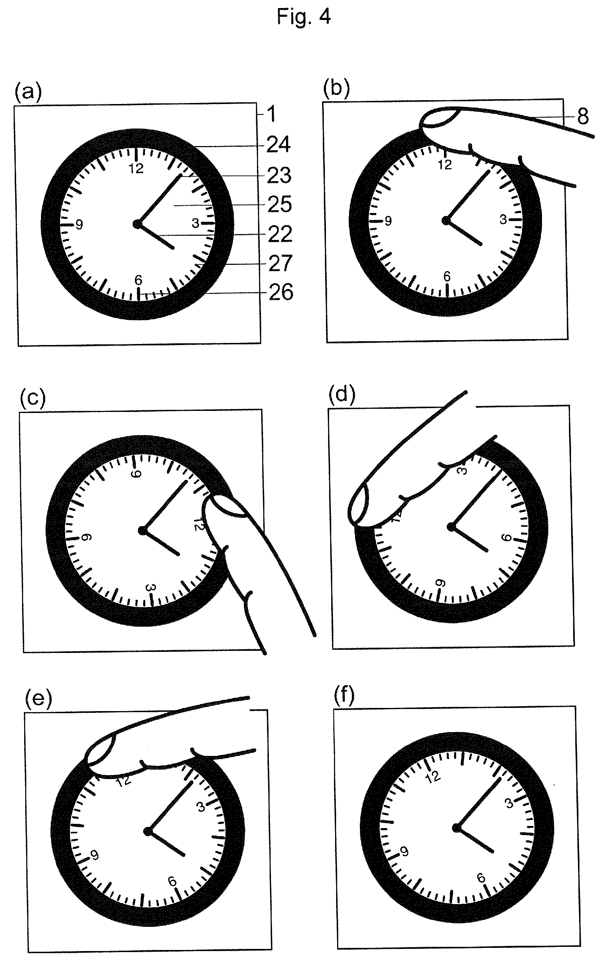

Fig. 4 ist ähnlich aufgebaut wie Fig. 3 und zeigt sequentiell die Passworteingabe bei einer weiteren Ausführung des erfindungsgemäßen Verfahrens. Neben Touchscreen 1, Stundenzeiger 22, Minutenzeiger 23, Lünette 24, Zifferblatt 25 und Stundenskala 26 weist die angezeigte Uhr eine Minutenskala 27 auf. In dieser Ausführungsvariante sind die Elemente Stundenzeiger 22 und Minutenzeiger 23 der Uhr nicht durch Berührung mit dem Touchscreen bewegbar. Des Weiteren bilden Lünette 24, Zifferblatt 25, Stundenskala 26, sowie Minutenskala 27 ein zusammengesetztes Element der Uhr, welches durch Berührung mit dem Touchscreen um die Rotationsachse der Zeiger rotiert werden kann.

Die Einstellungen zur Passworteingabe in der Ausführung des erfindungsgemäßen Verfahrens in Fig. 4 setzen voraus, dass alle Zahlen des Passworts durch eine ununterbrochene Berührung mit dem Touchscreen eingegeben werden. Und zwar soll anhand der Minutenskala 27 an dem Minutenzeiger 23 das numerische Passwort "53-20-11" eingestellt werden. Hierbei ist vorgesehen, dass die ersten beiden Zahlen des Passworts durch eine Umkehrung der Drehrichtung definiert werden und die dritte Zahl durch ein Loslösen der Berührung mit dem Touchscreen.

Fig. 4(a) zeigt den Touchscreen 1 mit der angezeigten Uhr zur Uhrzeit 16:07 Uhr. In der darauf folgenden Fig. 4(b) wird mit dem Finger 8 des Benutzers eine Berührung mit dem Touchscreen 1 auf der 12-Uhr-Position hergestellt. Von Fig. 4(b) nach Fig. 4(c) wurde die Lünette 24 zusammen mit dem Zifferblatt 25 und den beiden Skalen 26, 27 durch den Finger 8 bei anhaltender Berührung mit dem Touchscreen im Uhrzeigersinn gedreht. In Fig. 4(c) zeigt der Minutenzeiger 23 auf der Minutenskala 27 auf die erste Zahl des Passworts. Fig. 4(c) zeigt folglich die Position bei welcher die Drehrichtung umgekehrt wird, sodass die erste Zahl des Passworts von der Datenverarbeitungseinrichtung registriert wird. Von Fig. 4(c) nach Fig. 4(d) erfolgte die Drehung entgegen dem Uhrzeigersinn bis der Minutenzeiger 23 auf Minute "20" zeigt. In Fig. 4(d) erfolgt zur Registrierung der zweiten Zahl des Passworts wieder eine Umkehrung der Drehrichtung. Durch eine Drehung im Uhrzeigersinn wird die dritte und letzte Zahl des Passworts in Fig. 4(e) eingestellt, wo der Minutenzeiger 23 auf Minute "11" zeigt. In Fig. 4(f) wurde der Finger 8 von dem Touchscreen genommen, sodass die letzte Zahl des Passworts der Darstellung der Uhr zugeordnet wird.

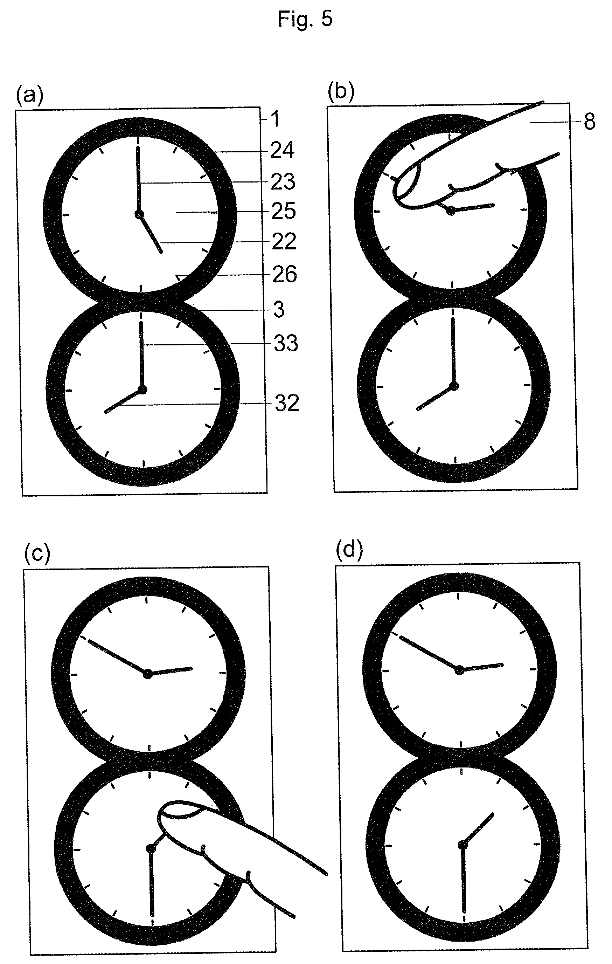

Fig. 5 zeigt eine Ausführungsvariante des erfindungsgemäßen Verfahrens bei welcher zwei analoge Uhren auf dem Touchscreen abgebildet sind. Die Verwendung von zwei Uhren kann bspw. zur Anzeige der aktuellen Zeit in zwei verschiedenen Zeitzonen von Nutzen sein. Alternativ könnte auch eine Uhr die Zeit anzeigen und die andere Uhr eine Stoppuhr darstellen. Bei den in Fig. 5 dargestellten Uhren sind nur die jeweiligen Zeiger 22, 23, 32, 33 anhand einer Berührung des Touchscreens verstellbar. Des Weiteren sind Stundenzeiger 22, 32 und Minutenzeiger 23, 33 in jeder Uhr so miteinander gekoppelt, dass bei einer Bewegung eines Zeigers der andere Zeiger sich einer Zeitanzeige entsprechend mitbewegt.

In der Ausführung in Fig. 5 wurden die Einstellungen zur Passworteingabe so gewählt, dass die Uhren sowohl über den Stundenzeiger 22, 32 als auch über den Minutenzeiger 23, 33 verstellt werden können. Ebenso wurde festgelegt, dass es für die korrekte Eingabe des Passworts nicht von Bedeutung ist, welche der Uhren zuerst verstellt wird. Das Passwort sieht vor, in der oberen Uhr die Uhrzeit 14:50 Uhr und in der unteren Uhr 3 die Uhrzeit 13:30 Uhr einzustellen.

Fig. 5(a) zeigt die Ausgangsstellung der auf dem Touchscreen abgebildeten Uhren. In Fig. 5(b) wurde die obere Uhr durch eine Berührung und darauf folgende Bewegung des Fingers 8 mit dem Minutenzeiger 23 auf die dem Passwort entsprechende Uhrzeit eingestellt. Hierzu waren mehrere Umdrehungen des Minutenzeigers 23 entgegen dem Uhrzeigersinn notwendig. In Fig. 5(c) wurde dann die untere Uhr 3 anhand dem Stundenzeiger 32 verstellt, sodass in Fig. 5(d) die dem Passwort entsprechenden Zeiten angezeigt werden und das Passwort vollständig eingeben ist.

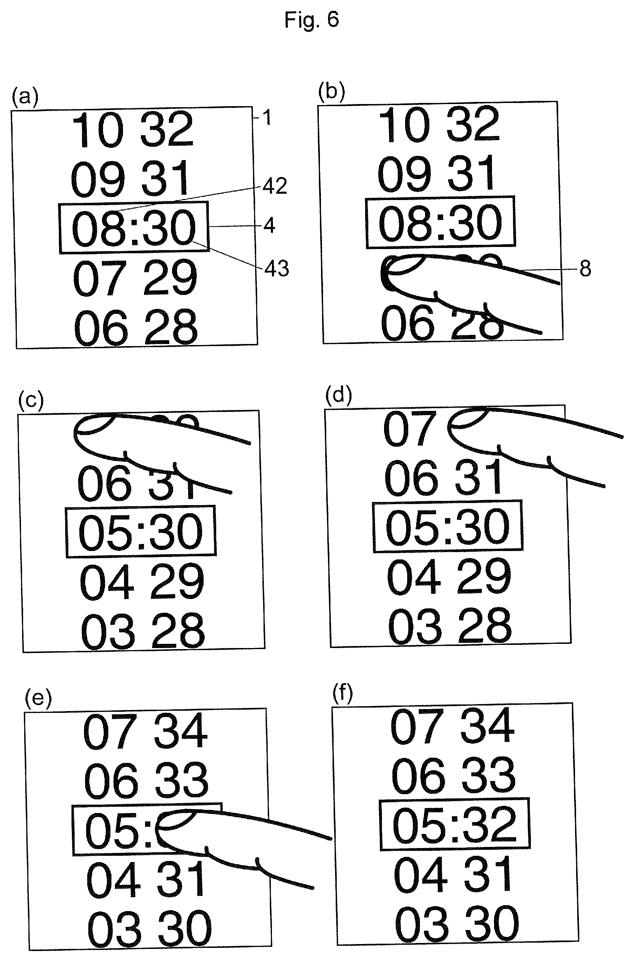

Bei der Ausführungsvariante des erfindungsgemäßen Verfahrens in Fig. 6 ist eine digitale Uhr auf dem Touchscreen 1 abgebildet, wobei alle Zahlen und Linien auf dem Bildschirm zu der digitalen Uhr gehören. Die digitale Uhr weist eine Stundenzahlenreihe 42 und eine Minutenzahlenreihe 43 auf. Die beiden Zahlenreihen 42 und 43 zeigen zusätzlich zu der aktuellen Uhrzeit in der Mitte auch die zwei bereits vergangene Werte der Anzeige unten, sowie die zwei noch kommenden Werte der Anzeige oben. Der Rahmen 4 in der Mitte der Bildschirms 1 umrahmt die Zahlen der Zahlenreihen 42 und 43, die der aktuellen Uhrzeit entsprechen. In Fig. 6(a) wird somit die Uhrzeit 8:30 Uhr angezeigt. Die Zahlen der Stundenzahlenreihe 42 sowie der Minutenzahlenreihe 43 rücken bei fortschreitender Zeit nach unten, sodass die vorher oberhalb des Rahmens 4 zu sehenden Zahlen nacheinander in dem Rahmen angezeigt werden. Bei der Stundenzahlenreihe 42 geschieht der Wechsel der Zahlen jeweils zur vollen Stunde und bei der Minutenzahlenreihe 43 geschieht der Wechsel entsprechend zur vollen Minute.

Die Einstellungen zur Passworteingabe bei der in Fig. 6 dargestellten Ausführung des erfindungsgemäßen Verfahrens erlauben ein Scrollen durch die Zahlen der Stundenzahlenreihe 42 und der Minutenzahlenreihe 43. Das einzustellende Passwort entspricht der Uhrzeit 5:32 Uhr, wobei es nicht von Bedeutung ist, welche der beiden Zahlen zuerst eingestellt wird. Zur Vermeidung einer automatischen Eingabe des Passworts zur Uhrzeit 5:32 Uhr wird zur Passworteingabe vorausgesetzt, dass sowohl die Stunde als auch die Minute jeweils anhand der Berührung mit dem Touchscreen bewegt werden müssen.

Fig. 6(a) zeigt den Touchscreen 1 mit der digitalen Uhr zur Uhrzeit 8:30 Uhr vor der Eingabe des Passworts. In Fig. 6(b) wurde mit den Finger 8 eine Berührung mit dem Touchscreen 1 auf der Zahlenreihe der Stunde 42 aufgebaut. Von Fig. 6(b) nach Fig. 6(c) wurde die Zahlenreihe der Stunde 42 nach oben bewegt, sodass die Stunde "5" in dem Rahmen 4 angezeigt wird. Von Fig. 6(c) zu Fig. 6(d) wurde der Finger 8 vom Touchscreen 1 genommen, um eine Berührung mit der Zahlenreihe der Minute 43 herzustellen. Von Fig. 6(d) nach Fig. 6(e) wurde die Zahlenreihe der Minute 43 nach unten bewegt, sodass die entsprechende Zahl des Passworts in dem Rahmen 4 angezeigt wird, siehe Fig. 6(f).

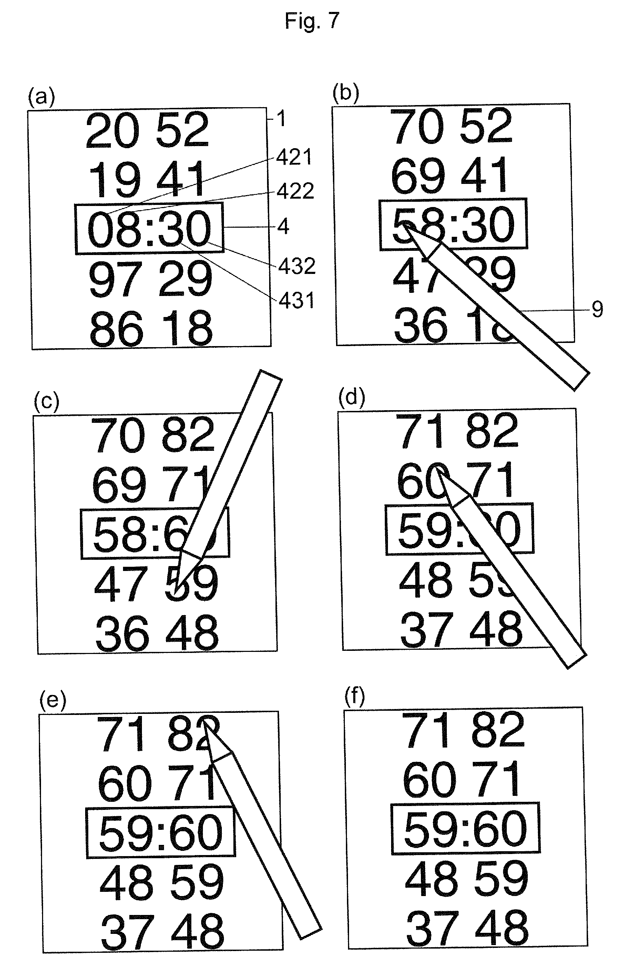

In Fig. 7 ist eine Abwandlung des Ausführungsbeispiels aus Fig. 6 dargestellt, wobei der primäre Unterschied in der Stundenzahlenreihe 42 und der Minutenzahlenreihe 43 der digitalen Uhr zu finden ist. In der Ausführung in Fig. 7 wird die aktuelle Stunde anhand einzelner Zahlenreihen 421 und 422 und die aktuelle Minute anhand einzelner Zahlenreihen 431 und 432 wiedergegeben. Die Zahlenreihe 421 rückt alle zehn Stunden um einen Wert nach unten, die Zahlenreihe 422 alle Stunde, die Zahlenreihe 431 alle zehn Minuten und die Zahlenreihe 432 rückt jeweils zur vollen Minute eine Wert nach unten. Zur Passworteingabe sind alle vier Zahlenreihen 421, 422, 431, 432 separat einzustellen. Das einzustellende Passwort lautet "59:60" und für eine korrekte Passworteingabe ist eine bestimmte zeitliche Reihenfolge der Eingabe notwendig. Es soll zuerst die Zahlenreihe 421 eingestellt werden, gefolgt von den Zahlenreihen 431 und 422, sowie der Zahlreihe 432 zum Schluss. Fig. 7(a) zeigt den Touchscreen 1 mit der digitalen Uhr zur Uhrzeit 8:30 Uhr. In Fig. 7(b) wird mit einem dafür vorgesehenen Stift 9 eine Berührung mit dem Touchscreen hergestellt und die dem Passwort entsprechende Stellung der Zahlenreihe 421 eingestellt. Hierfür können mehrere Berührungen mit dem Touchscreen 1 aufgebracht werden. Alternativ kann die Zahlenreihe 421 durch ein Streichen in Bewegung versetzt werden und dann durch ein Antippen bei der richtigen Stellung zu Halt gebracht werden. In Fig. 7(c) wird entsprechend die Zahlenreihe 431 eingestellt gefolgt von den Zahlenreihen 422 in Fig. 7(d) und der Zahlreihe 432 in Fig. 7(e). Fig. 7(f) zeigt den Touchscreen 1 mit der korrekt eingestellten digitalen Uhr, sodass nun die passwortgeschützte Aktion ausgeführt werden kann.

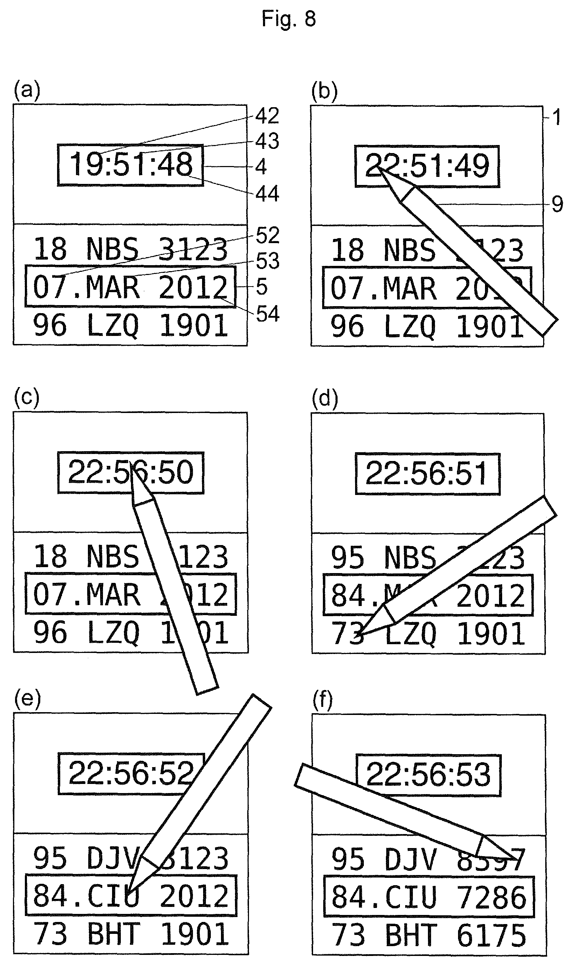

Fig. 8 zeigt ein weiteres Ausführungsbeispiel des erfindungsgemäßen Verfahrens zur Passworteingabe an einer digitalen Uhr mit Datumsanzeige 5. Die digitale Uhr weist eine Stundenanzeige 42, eine Minutenanzeige 43 und eine Sekundenanzeige 44 auf. Im Gegensatz zu den digitalen Uhren in den Fig. 6 und 7 sind in der Variante in Fig. 8 nicht die vergangenen und kommenden Zahlen der Anzeige zu sehen, sodass ein Scrollen durch die Werte der Anzeige nicht vorgesehen ist. Die Datumsanzeige 5 besteht aus der Tagesanzeige 52 in Form einer zweistelligen Zahlenreihe, der Monatsanzeige 53 anhand einer Reihe mit jeweils den ersten drei Buchstaben des Monats, sowie einer Jahresanzeige 54 anhand von vier Zahlenreihen. Bei der Datumsanzeige 5 sind wiederum die Zahlen und Buchstaben unterhalb und oberhalb der Datumsanzeige 5 dargestellt, sodass ein Scrollen durch die verschiedenen Werte sichtbar ist.

Zur Passworteingabe weist das Ausführungsbeispiel in Fig. 8 eine Reihe von Einstellungen auf. Die Stundenanzeige 42, die Minutenanzeige 43 und die Sekundenanzeige 44 der digitalen Uhr 4 kann durch Antippen um jeweils einen Wert erhöht werden. Das eingestellte Passwort sieht in dieser Ausführungsvariante vor, dass die Stundenanzeige 42 um drei Stunden und die Minutenanzeige 43 um fünf Minuten vorgestellt werden soll. Der Wert der Sekundenanzeige 44 hingegen soll der aktuellen Sekunde entsprechen. Bei der Datumsanzeige 5 kann ähnlich der digitalen Uhr 4 in Fig. 7 jede Stelle der Tagesanzeige 52, Monatsanzeige 53 und Jahresanzeige 54 verstellt werden. Hier soll die Kombination "84. CIU 7286" eingestellt werden.

Fig. 8(a) zeigt den Touchscreen 1 mit der digitalen Uhr 4 zur Zeit 19:51:48 Uhr und die Datumsanzeige 5 mit dem Datum 7.3.2012. In Fig. 8(b) wurde anhand eines zur Bedienung des Touchscreens 1 vorgesehenen Stift 9 dreimal auf die Stundenanzeige 42 der digitalen Uhr getippt, sodass der Wert der Stundenanzeige 42 sich um drei Stunden erhöht hat. In der darauffolgenden Fig. 8(c) wurde die Minutenanzeige 43 fünfmal kurz mit dem Stift 9 berührt, sodass der Wert der Minutenanzeige 43 um fünf Minuten erhöht wurde. Fig. 8(d) zeigt den Touchscreen 1 nachdem die beiden Zahlen der Tagesanzeige 52 durch Streichen und Ziehen mit dem Stift 9 verstellt wurden, gefolgt von der entsprechenden Stellung der drei Buchstaben der Monatsanzeige 53 in Fig. 8(d) und der Stellung der vier Zahlen der Jahresanzeige 54 in Fig. 8(e). In Fig. 8(f) ist dann das fertig eingestellte Passwort zu sehen, wobei die Anzeige der digitalen Uhr 4 kontinuierlich weiterläuft.

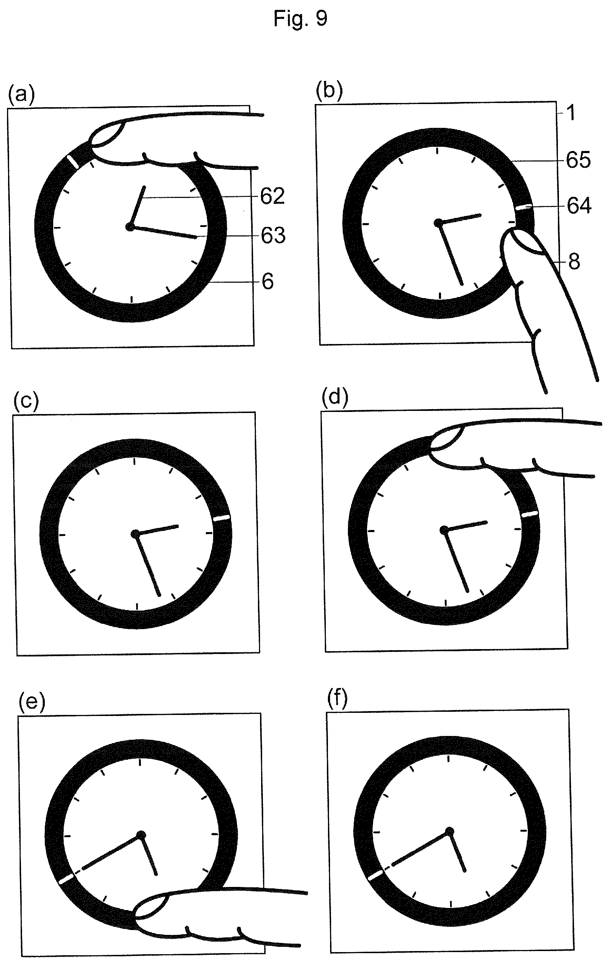

In Fig. 9 ist eine Ausführungsvariante des erfindungsgemäßen Verfahrens mit einer interaktiven, analogen Uhr 6 gemäß Dokument DE 102010020466 A1 dargestellt. Die Uhr 6 weist einen Stundenzeiger 62 und einen Minutenzeiger 63 auf, sowie eine Markierung 64 auf der Lünette 65. Das Ablesen der Zeit erfolgt hier durch das Drehen der Lünette 65, was eine Drehung des Stundenzeigers 62 und des Minutenzeigers 63 zur Folge hat, wobei die beiden Zeiger 62, 63 halb so weit drehen wie die Lünette 65. Die aktuelle Stunde ergibt sich aus der Winkelstellung an welcher der Stundenzeiger 62 mit der Markierung 64 auf der Lünette 65 übereinstimmt. Ebenso ergibt sich die aktuelle Minute aus der Winkelstellung an welcher der Minutenzeiger 63 mit der Markierung 64 auf der Lünette 65 übereinstimmt. Die Ausgangsstellung der Lünette vor der Passworteingabe kann zufällig von der Datenverarbeitungseinrichtung festgelegt werden, sodass bei jeder neuen Passworteingabe eine andere Stellung der Lünette angezeigt wird. Alternativ kann die Stellung der Lünette verwendet werden, in welcher die Lünette bei der letzten Benutzereingabe hinterlassen wurde.

In der Ausführungsvariante des erfindungsgemäßen Verfahrens in Fig. 9 ist vorgesehen, das Ablesen der aktuellen Zeit als Passworteingabe zu verwenden. Die Registrierung eines korrekten Ablesens der Zeit wird durch das Loslassen der Berührung mit dem Touchscreen bei den Winkelstellungen, an welchen die Zeiger 26, 63 mit der Markierung 64 auf der Lünette 65 übereinstimmen, getriggert. Für eine korrekte Ausführung der Passworteingabe ist die Position, an welcher die Berührung des Touchscreens die Lünette 65 trifft, nicht von Bedeutung. Ebenso ist es bei der Einstellung der vorliegenden Variante nicht von Bedeutung, ob zuerst die Stunde oder zuerst die Minute abgelesen wird.

Fig. 9(a) zeigt den Touchscreen 1 mit der interaktiven, analogen Uhr 6 und dem Finger 8 des Benutzers, der den Touchscreen 1 an der Lünette 65 der Uhr 6 berührt. Von Fig, 9(a) nach Fig. 9(b) wurde die Lünette 65 so im Uhrzeigersinn gedreht, dass die Markierung 64 auf der Lünette 65 mit dem Stundenzeiger 62 übereinstimmt. In Fig. 9(c) wurde die Finger 8 von dem Touchscreen 1 genommen, sodass die aktuelle Stunde registriert wird, welche 2 Uhr beträgt. In Fig. 9(d) wurde die Berührung des Touchscreens 1 wieder an der Lünette 65 aufgenommen und die Lünette 65 wird im Uhrzeigersinn zu der Stellung in Fig. 9(e) gedreht. In Fig. 9(e) stimmt die Markierung 64 auf der Lünette 65 der Uhr 6 mit dem Minutenzeiger 63 überein, sodass sich zusammen mit der bereits gelesenen Stunde die Uhrzeit zu 2:40 Uhr ergibt. In Fig. 9(f) wurde wiederum die Berührung des Fingers 8 mit dem Touchscreen 1 gelöst, sodass die eingestellte Winkelstellung der Uhr 6 registriert wird. Da die beiden registrierten Positionen der Lünette 65 der aktuellen Zeit entspricht, kann nun die passwortgeschützte Aktion ausgeführt werden.

Bei der Ausführungsvariante in Fig. 9 können Elemente der Uhr bewegt werden, ohne dass die von der Uhr darzustellende Zeit verstellt wird. Dies ist auf die Art der interaktiven, analogen Anzeige zurückzuführen. An solch einer interaktiven, analogen Uhr kann auch ein numerisches Passwort, das nicht der aktuellen Zeit entspricht eingegeben werden. Bspw. kann der Minutenzeiger auf der Minutenskala auf die verschiedenen Zahlen des Passworts gestellt werden, ohne die Stellungen von der Lünette oder dem Stundenzeiger beachten zu müssen. Ebenso kann eine Kombination aus definierten Zahlen und Werten der aktuellen Zeit als Passwort verwendet werden, so dass z.B. die dritte Stelle des Passworts der aktuellen Minute entspricht.

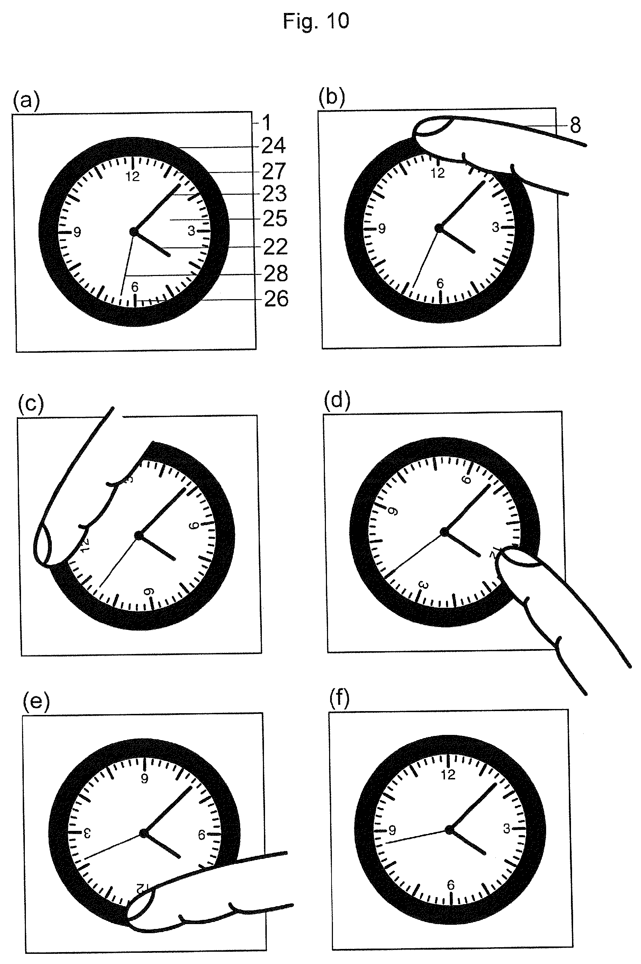

In den Fig. 10 bis 13 sind Ausführungsbeispiele des erfindungsgemäßen Verfahrens beschrieben, die auf unterschiedliche Art und Weise ein Zurückstellen der Uhr zur Anzeige der aktuellen Uhrzeit nach Eingabe des Passworts verwenden.

Fig. 10 zeigt sequentiell die Passworteingabe einer Ausführung des erfindungsgemäßen Verfahrens welche fast identisch ist mit dem in Fig. 4 dargestellten Ausführungsbeispiel.

Neben Touchscreen 1, Stundenzeiger 22, Minutenzeiger 23, Lünette 24, Zifferblatt 25, Stundenskala 26 und Minutenskala 27 weist die angezeigte Uhr einen Sekundenzeiger 28 auf. Die Elemente Stundenzeiger 22, Minutenzeiger 23 und Sekundenzeiger 28 der Uhr sind nicht durch Berührung mit dem Touchscreen bewegbar. Des Weiteren bilden Lünette 24, Zifferblatt 25, Stundenskala 26, sowie Minutenskala 27 ein zusammengesetztes Element der Uhr, welches durch Berührung mit dem Touchscreen um die Rotationsachse der Zeiger rotiert werden kann. In Fig. 10 wird das Passwort "53-20-11" durch das Rotieren der Minutenskala eingegeben, indem die entsprechenden Minutenindexe mit dem Sekundenzeiger in Übereinstimmung gebracht werden.

In Fig. 10(a) ist die Ausgangsstellung der auf dem Touchscreen dargestellten Uhr gezeigt. In Fig. 10(b) wird eine Berührung mit dem Touchscreen anhand eines Fingers 8 aufgebaut und die Lünette wird entgegen dem Uhrzeigersinn so gedreht, dass der Sekundenzeiger auf der Minutenskala die Zahl "53" anzeigt, siehe Fig. 10(c). Darauf folgend wird die Lünette mit dem Uhrzeigersinn rotiert, sodass die Umkehrung der Drehrichtung zur Registrierung der ersten Zahl des Passworts führt. Auf dieselbe Art und Weise wird die zweite Zahl "20" des Passworts in Fig. 10(d) eingegeben. Die dritte Zahl "11" des Passworts wird in Fig. 10(e) durch das Lösen der Berührung mit dem Touchscreen bei der entsprechenden Winkelstellung der Lünette relativ zum Sekundenzeiger registriert. Nach dem Lösen der Berührung des Fingers mit dem Touchscreen rotiert die Lünette zurück zu ihrer Ausgangsstellung, sodass in Fig. 10(f) wieder die aktuelle Uhrzeit angezeigt wird.

Während der Passworteingabe in Fig. 10 führen die Zeiger der Uhr ihre Rotation entsprechend der aktuellen Uhrzeit fort. Obwohl die Passworteingabe nur wenige Sekunden dauert ist dies beim Sekundenzeiger deutlich zu erkennen. Zwischen Fig. 10(a) und Fig. 10(f) sind ungefähr 11 Sekunden vergangen. Die bei der Passworteingabe auf dem Touchscreen entstehenden Spuren hängen hier zusätzlich zur Uhrzeit bei der Passworteingabe auch von der Dauer der Passworteingabe ab. Die Spuren auf dem Touchscreen sind somit unterschiedlich, wenn dasselbe Passwort zu derselben Zeit einmal schnell und einmal langsam eingegeben wird. Zur korrekten Bestimmung des Passworts anhand der Spuren auf dem Bildschirm wäre somit die sekundengenaue Uhrzeit bei der Eingabe jeder Zahl des Passworts notwendig.

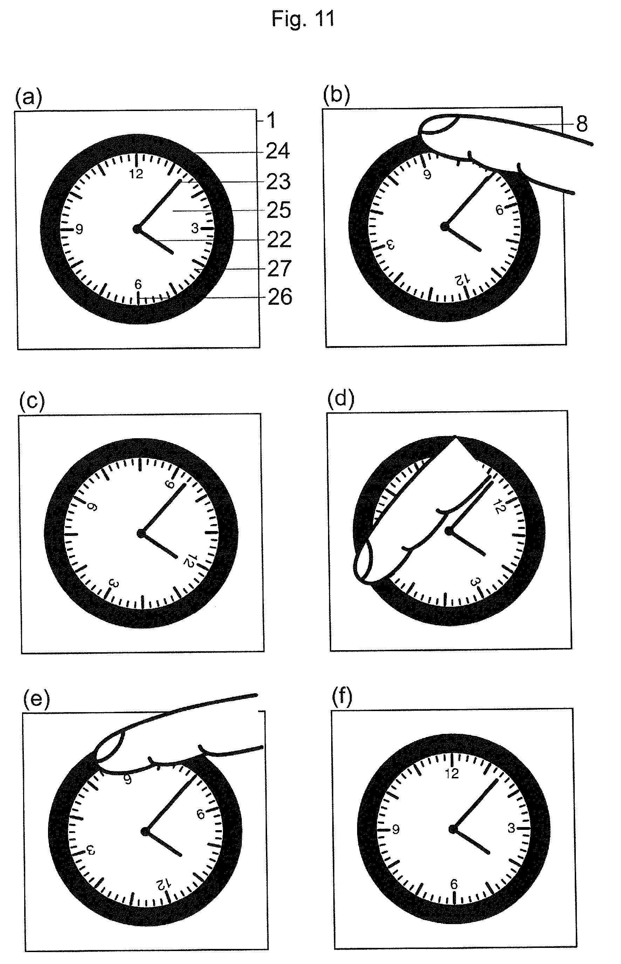

Fig. 11 zeigt sequentiell Momentaufnahmen bei der Passworteingabe einer Ausführung des erfindungsgemäßen Verfahrens mit einer auf dem Touchscreen 1 dargestellten analogen Uhr bestehend aus Stundenzeiger 22, Minutenzeiger 23, Lünette 24, Zifferblatt 25, Stundenskala 26 und Minutenskala 27. Die Elemente Stundenzeiger 22 und Minutenzeiger 23 der Uhr sind nicht durch Berührung mit dem Touchscreen bewegbar. Des Weiteren bilden Lünette 24, Zifferblatt 25, Stundenskala 26, sowie Minutenskala 27 ein zusammengesetztes Element der Uhr, welches durch Berührung mit dem Touchscreen um die Rotationsachse der Zeiger rotiert werden kann. In Fig. 11 wird durch das Rotieren der Lünette zweimal die Zahl "8" eingegeben, indem der entsprechende Stundenindex mit dem Minutenzeiger in Übereinstimmung gebracht wird. Die beiden einzugebenden Zahlen können hier das gesamte Passwort oder aber nur einen Teil des Passworts darstellen. Es können also sowohl vor den in Fig. 11 dargestellten Momentaufnahmen als auch danach weitere Zahlen für ein längeres Passwort eingegeben werden. In dem vorliegenden Ausführungsbeispiel ist vorgesehen, dass ein Lösen der Berührung mit dem Touchscreen die Registrierung einer Zahl des Passworts hervorruft.

Bei dem Ausführungsbeispiel in Fig. 11 stellt sich die Lünette der Uhr zusammen mit der Stunden- und Minutenskala nach dem Lösen der Berührung mit dem Touchscreen wieder zurück in ihre Ausgangsstellung. Die Ausgangsstellung der Uhr ist in Fig. 11(a) dargestellt. In Fig. 11(b) wurde die Lünette anhand einer Berührung mit dem Touchscreen durch einen Finger 8 so rotiert, dass der Index der Stunde "8" mit dem Minutenzeiger übereinstimmt. Zwischen Fig. 11(b) und Fig. 11(c) wurde die Berührung mit dem Touchscreen gelöst, wodurch die Zahl "8" des Passworts registriert wurde und die Lünette mit der Skala nun beginnt sich zurück in die Ausgangsstellung zu bewegen. Eine Momentaufnahme während der Rückstellbewegung der Lünette ist in Fig. 11(c) dargestellt. In einer weiteren Momentaufnahme der Rückstellbewegung in Fig. 11(d) wurde wiederum eine Berührung mit dem Touchscreen aufgebaut, durch welche die Rückstellbewegung der Lünette angehalten wird. Wie in Fig. 11(d) dargestellt wurde die Berührung mit dem Touchscreen aufgebaut bevor sich die Lünette vollständig in ihre Ausgangsposition zurück bewegen konnte. Zwischen Fig. 11(d) und Fig. 11(e) wurde die Lünette so im Uhrzeigersinn rotiert, dass wieder der Index der Stunde "8" mit dem Minutenzeiger übereinstimmt, siehe Fig. 11(e). Durch Lösen der Berührung wird die Zahl "8" als Teil des Passworts registriert und die Lünette beginnt sich wieder in ihre Ausgangsstellung zurück zu bewegen. In Fig. 11(f) hat die Lünette sich vollständig in ihre Ausgangsstellung zurück bewegt.

In dem Ausführungsbeispiel in Fig. 11 wird anhand des erfindungsgemäßen Verfahrens nacheinander zweimal dieselbe Zahl eingegeben. Die auf dem Touchscreen hinterlassenen Spuren sind jedoch deutlich unterschiedlich. Für die Eingabe der ersten Zahl wurde die Lünette um einen Winkel von ungefähr 180 Grad mit dem Uhrzeigersinn rotiert. Für die Eingabe der zweiten Zahl wurde de Lünette allerdings nur um einen Winkel von ungefähr 90 Grad mit dem Uhrzeigersinn rotiert. Der erheblich geringere Rotationswinkel bei der Eingabe der zweiten Zahl ist darauf zurückzuführen, dass sich die Lünette zu Beginn der Eingabe der zweiten Zahl noch nicht vollständig in ihre Ausgangsstellung zurück bewegt hat. Zur Identifizierung der ersten eingegebenen Zahl anhand der auf dem Touchscreen hinterlassenen Spur muss nur die aktuelle Minute zum Zeitpunkt der Eingabe bekannt sein. Dadurch, dass die Eingabe der zweiten Zahl während der Rückstellbewegung der Lünette erfolgte, ist eine Identifizierung der zweiten eingegebenen Zahl anhand der auf dem Touchscreen hinterlassenen Spuren nochmals erschwert worden.

Es ist vorgesehen, dass die Geschwindigkeit mit welcher sich die Uhr aus dem Ausführungsbeispiel von Fig. 11 auf die Ausgangsstellung zurückstellt so langsam ist, dass der Benutzer genügend Zeit hat, den Touchscreen für die Eingabe des nächsten Teils des Passworts zu berühren, bevor die Uhr ihre Ausgangsstellung erreicht hat. Dies ist notwendig, damit die bei der Eingabe des nächsten Teils des Passworts entstehende Spur auf dem Touchscreen zusätzlich zur aktuellen Uhrzeit auch von der Dauer zwischen der Eingabe der Teile des Passworts abhängt. Des Weiteren ist vorgesehen, dass die Geschwindigkeit mit welcher sich die Uhr auf die Ausgangsstellung zurückstellt genügend schnell ist, um einen gewissen Winkel zu durchlaufen, bevor der Benutzer den Touchscreen für die Eingabe des nächsten Teils des Passworts berührt. Dies ist notwendig, damit die Rückstellung der Uhr sich auf die auf dem Touchscreen entstehenden Spuren auswirken kann. In einer weiteren Ausführungsvariante ist vorgesehen, dass die Rückstellgeschwindigkeit der Lünette bei jeder neuen Eingabe des Passworts einen anderen Wert annimmt.

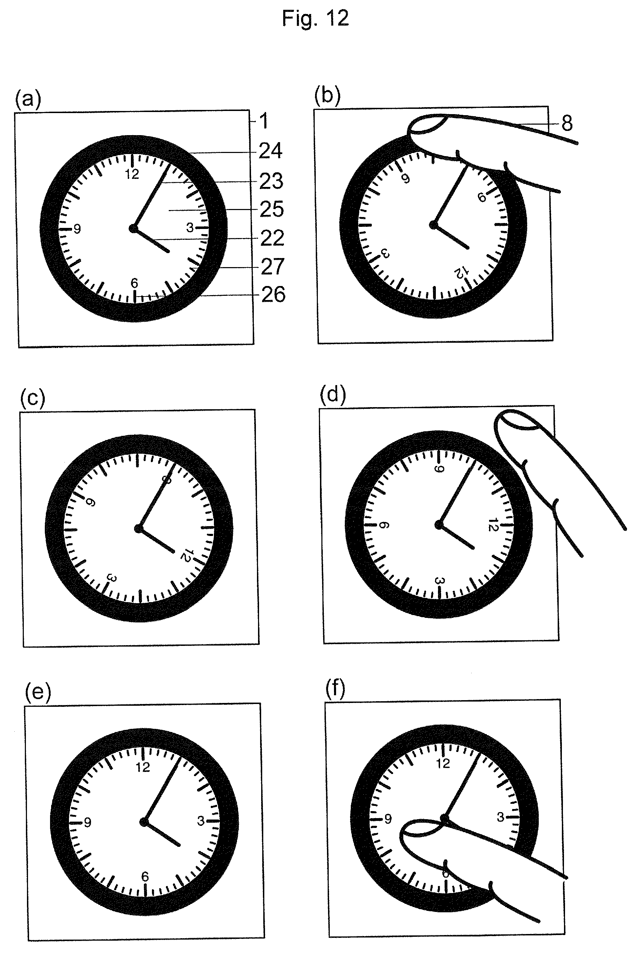

Fig. 12 zeigt sequentiell Momentaufnahmen bei der Passworteingabe einer Ausführung des erfindungsgemäßen Verfahrens zur Uhrzeit 4:05 Uhr. Auf dem Touchscreen 1 ist eine analoge Uhr dargestellt, welche aus den Elementen Stundenzeiger 22, Minutenzeiger 23, Lünette 24, Zifferblatt 25, Stundenskala 26 und Minutenskala 27 besteht. Die Elemente Stundenzeiger 22 und Minutenzeiger 23 der Uhr sind nicht durch Berührung mit dem Touchscreen bewegbar. Des Weiteren bilden Lünette 24, Zifferblatt 25, Stundenskala 26, sowie Minutenskala 27 ein zusammengesetztes Element der Uhr, welches durch Berührung mit dem Touchscreen um die Rotationsachse der Zeiger rotiert werden kann. In Fig. 12 wird die Zahlenkombination "8-0-1" eingegeben, indem der entsprechende Stundenindex mit dem Minutenzeiger in Übereinstimmung gebracht wird. In dem Ausführungsbeispiel ist die Zahl "0" auf der Stunde "10" positioniert. Die drei einzugebenden Zahlen können hier das gesamte Passwort oder aber nur einen Teil des Passworts darstellen. Es können also sowohl vor den in Fig. 12 dargestellten Momentaufnahmen als auch danach weitere Zahlen für ein längeres Passwort eingegeben werden. In dem vorliegenden Ausführungsbeispiel ist vorgesehen, dass ein Lösen der Berührung mit dem Touchscreen die Registrierung einer Zahl des Passworts hervorruft.

In Fig. 12(a) ist der Touchscreen mit der analogen Uhr vor der Eingabe der drei Zahlen "8-0-1" dargestellt. In Fig. 12(b) wurde die Lünette anhand von einer Berührung eines Fingers 8 mit dem Touchscreen so im Uhrzeigersinn rotiert, dass die Stunde "8" mit dem Minutenzeiger übereinstimmt. Nach Lösen der Berührung in der in Fig. 12(b) abgebildeten Stellung der Uhr wird somit die Zahl "8" als Teil des einzugebenden Passworts registriert. Wie in Fig. 12(c) dargestellt beginnt sich die Lünette nun langsam zurück in ihre Ausgangsstellung zu bewegen. Bei der Rückstellbewegung der Lünette trifft die Stunde "10" auf den Minutenzeiger, siehe Fig. 12(d). Wie in Fig. 12(d) dargestellt ist es zur Eingabe der nächsten Zahl "0" der Passworts somit lediglich notwendig, den Bildschirm in dem richtigen Zeitpunkt kurz anzutippen. Da bei diesem Antippen des Bildschirms, die Berührung genau dann gelöst wird, wenn die Stunde "10" mit dem Minutenzeiger übereinstimmt, wird nun die Zahl "0" des Passworts registriert. Hierbei ist es nicht von Bedeutung an welcher Stelle auf dem Bildschirm die Berührung mit dem Touchscreen stattfindet. Wie in Fig. 12(d) dargestellt, kann der Bildschirm zur Passworteingabe also auch an einer Stelle neben der Uhr berührt werden. Nach dem Antippen des Bildschirms zur Eingabe der Zahl "0" setzt die Lünette ihre Rückstellbewegung fort. In Fig. 12(e) ist der Bildschirm nach vollständiger Rückstellung der Uhr dargestellt, sodass wieder die aktuelle Zeit gelesen werden kann. Da der Minutenzeiger bereits auf die nun einzugebende Zahl des Passworts "1" zeigt, ist es nicht notwendig die Lünette zu drehen. Wie in Fig. 12(f) dargestellt genügt es zur Passworteingabe hier den Bildschirm an einer beliebigen Stelle anzutippen. Beim Lösen der Berührung des Bildschirms wird dann die Stellung des Minutenzeigers auf der Stundenskala registriert und die entsprechende Zahl dem Passwort hinzugefügt.

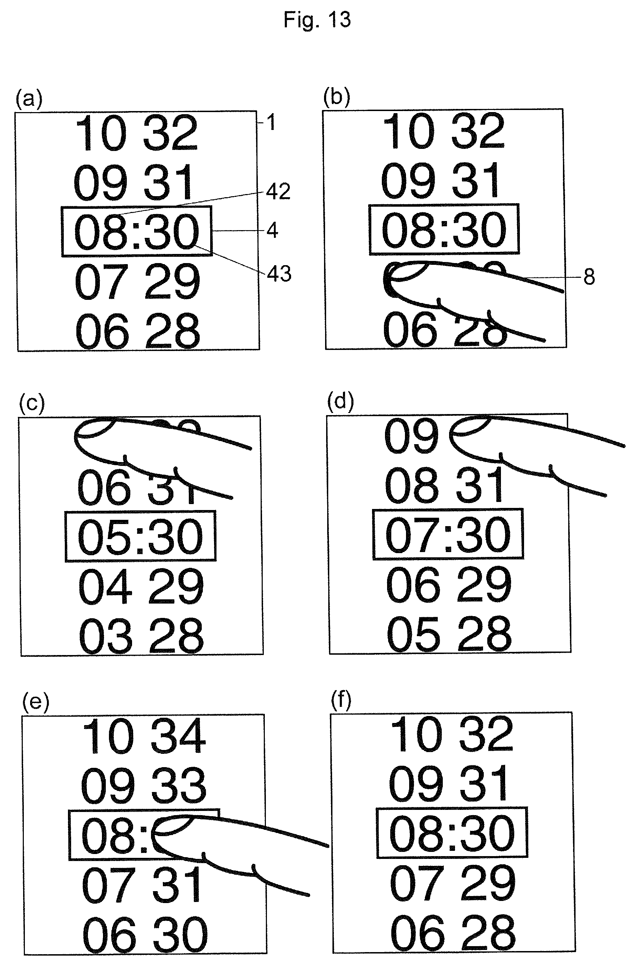

Fig. 13 zeigt nacheinander Momentaufnahmen zur Passworteingabe bei der Ausführungsvariante aus Fig. 6 mit dem Unterschied, dass sich die Uhr nach Eingabe des Passworts auf die aktuelle Uhrzeit zurückstellt. Das Zurückstellen der Uhr auf die aktuelle Uhrzeit erfolgt erst nach dem Verstellen der Stundenzahlenreihe 42 in Fig. 13(c) und dem darauf folgenden Lösen der Berührung des Fingers 8 mit dem Touchscreen 1. In Fig. 13(d) hat sich die Stundenanzeige bereits um zwei Stunden zurück bewegt. Während sich die Stundenanzeige auf die aktuelle Stunde zurückstellt, wird von Fig. 13(d) nach Fig. 13(e) die Minutenanzeige zur Passworteingabe verstellt. Nach dem Lösen der Berührung mit der Minutenanzeige stellt sich auch die Minutenanzeige auf die aktuelle Zeit zurück. Somit ist in Fig. 13(f) nach erfolgter Passworteingabe wieder die aktuelle Uhrzeit zu lesen.

Das automatische Rückstellen der Uhr in Fig. 13 hat gegenüber der Ausführungsvariante in Fig. 6 den Vorteil, dass zu keinem Zeitpunkt das vollständige Passwort auf dem Bildschirm angezeigt wird.

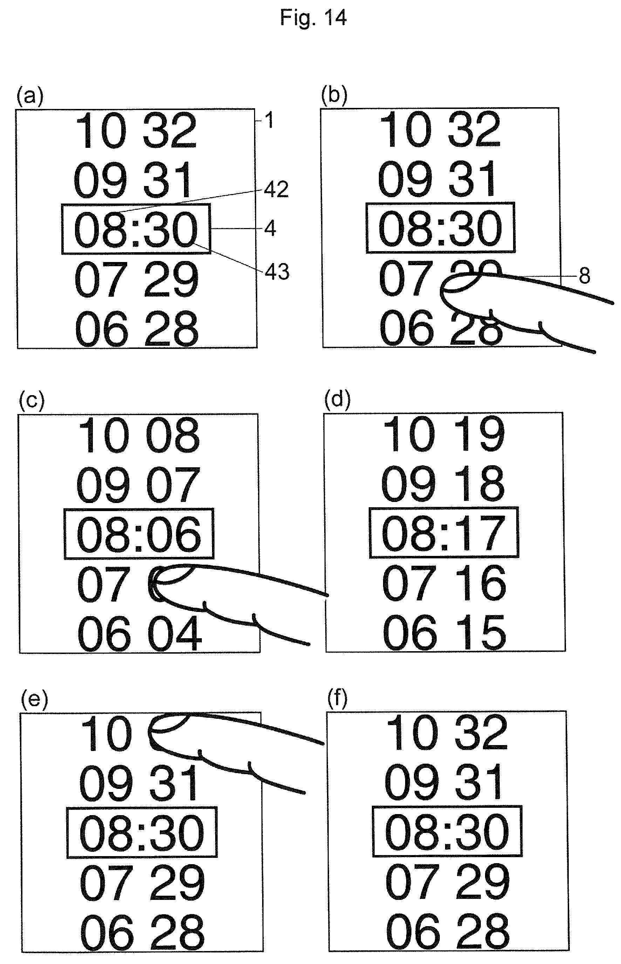

In Fig. 14 sind sequentiell Momentaufnahmen zur Passworteingabe der Ausführungsvariante aus Fig. 13 dargestellt mit dem Unterschied, dass die Passworteingabe nicht über die Stundenzahlenreihe 42 und die Minutenzahlenreihe 43 zusammen erfolgt, sondern nacheinander ausschließlich über die Minutenzahlenreihe 43. Wie in den Fig. 6 und 12 lautet das Passwort "05-32". Hierfür wird in Fig. 14(b) eine Berührung mit einem Finger 8 auf der Minutenzahlenreihe hergestellt, um dann die Minutenzahlenreihe nach oben in Bewegung zu versetzen. Auf diese Art und Weise kann durch die Zahlen der Minutenanzeige gescrollt werden, bis die erste Zahl des Passworts auf dem Touchscreen erscheint. In Fig. 14(c) ist die erste Zahl des Passworts "05" erschienen, welche mit dem Finger angetippt wird. Durch das Antippen wird die Bewegung der Minutenanzeige gestoppt und die Zahl des Passworts registriert.

Für die Registrierung der Zahlen des Passworts ist es in der Ausführungsvariante in Fig. 14 nicht von Bedeutung wo auf dem Bildschirm die Zahlen des Passworts angetippt werden.

Da ein Antippen einer sehr kurzen Berührung entspricht, befindet sich der Finger nach dem Registrieren der ersten Zahl des Passworts nicht mehr in Berührung mit dem Touchscreen und die Anzeige beginnt sich auf die aktuelle Zeit zurückzustellen, siehe Fig. 14(d). In Fig. 14(e) hat sich die Anzeige wieder auf die aktuelle Uhrzeit zurückgestellt und die zweite Zahl des Passworts ist auf dem Bildschirm erschienen. Wie in Fig. 14(e) dargestellt wird diese nun zur Registrierung der zweiten Zahl des Passworts ebenfalls angetippt. Nach erfolgreicher Passworteingabe ist in Fig. 14(f) wieder die aktuelle Uhrzeit angezeigt.

In einer weiteren Ausführungsvariante des erfindungsgemäßen Verfahrens ist im Gegensatz zu dem Beispiel aus Fig. 14 vorgesehen, dass alle Zahlen des Passworts zur Registrierung an ein und der selben Position auf dem Bildschirm angetippt werden müssen. Dies hat den Vorteil, dass sich die durch das Antippen erzeugten Spuren und Abdrücke auf dem Touchscreen überlagern und somit ein Erkennen des Passworts zusätzlich erschweren.

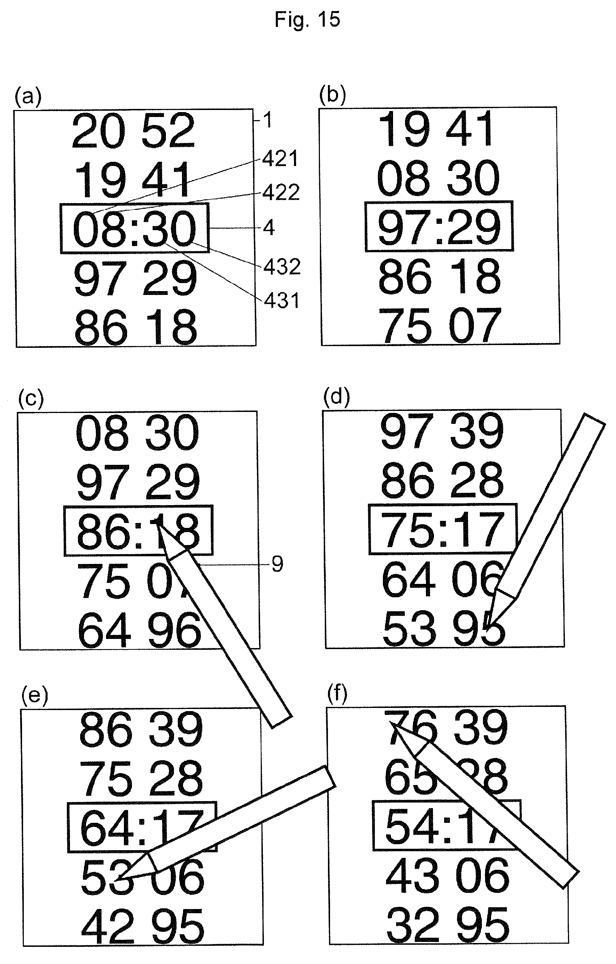

Fig. 15 zeigt sequentiell Momentaufnahmen bei der Passworteingabe einer Ausführung des erfindungsgemäßen Verfahrens ähnlich der in Fig. 7 zur Uhrzeit 8:30 Uhr. In der Ausführung in Fig. 15 wird die aktuelle Stunde anhand einzelner Zahlenreihen 421 und 422 und die aktuelle Minute anhand einzelner Zahlenreihen 431 und 432 wiedergegeben. Die Zahlenreihe 421 rückt alle zehn Stunden um einen Wert nach unten, die Zahlenreihe 422 alle Stunde, die Zahlenreihe 431 alle zehn Minuten und die Zahlenreihe 432 rückt jeweils zur vollen Minute eine Wert nach unten. Zur Passworteingabe sind die Zahlen des Passworts auf den vier Zahlenreihen 421, 422, 431, 432 separat einzustellen. Das einzustellende Passwort lautet "73:15" und für eine korrekte Passworteingabe ist keine bestimmte zeitliche Reihenfolge der Eingabe notwendig. Das Einstellen der Zahlen des Passworts erfolgt durch ein Antippen der jeweiligen Zahl auf der entsprechenden Zahlenreihe.

Der Unterschied der Ausführungsvariante in Fig. 15 zu der in Fig. 7 besteht darin, dass die Zahlenreihen 421, 422, 431 und 432 zur Passworteingabe kontinuierlich fortlaufen. Dieses Fortlaufen jeder Zahlenreihe erfolgt ähnlich dem Fortlaufen aufgrund der Zeit. Im vorliegenden Beispiel kann das Fortlaufen der Zahlenreihen als ein Hochrücken der dargestellten Zahlen beschrieben werden. Alle vier Zahlenreihen bewegen sich gleich schnell und die Bewegung ist etwas schneller als die einer Sekundenanzeige. Alternativ können die Zahlen auch nach unten fortlaufen. Das Fortlaufen kann kontinuierlich oder sprunghaft erfolgen.

In Fig. 15(a) ist der Touchscreen 1 zur Uhrzeit 8:30 Uhr vor Eingabe des Passworts dargestellt. Hier ist es also möglich vor der Eingabe des Passworts die Uhrzeit zu lesen. Zwischen Fig. 15(a) und Fig. 15(b) wurde die Passworteingabe gestartet, sodass die Zahlenreihen nun nach oben laufen. Dies ist daran zu erkennen, dass die Zahlen "08:30" in Fig. 15(b) nicht mehr in der Mitte dargestellt sind, sondern eine Reihe weiter nach oben gerückt sind. Der Start der Passworteingabe kann durch eine Berührung mit dem Touchscreen oder der Betätigung einer Funktionstaste hervorgerufen werden. Alternativ ist vorgesehen, dass die Zahlenreihen mit einer definierten Verzögerung nach der Anzeige der Uhr mit der Fortlaufbewegung beginnen.

In Fig. 15(c) haben sich die Zahlenreihen um eine weitere Zahl nach oben bewegt, sodass die Zahlen "08:30" in der obersten Zahlenreihe zu erkennen sind. Anhand eines Stifts 9 wird nun eine Zahl des Passworts eingegeben. Hierbei handelt es sich um die dritte Stelle des Passworts mit der Zahl "1", welche sich in Fig. 15(c) in der Mitte der Zahlenreihe 431 befindet. Wie in Fig. 15(c) dargestellt, wird die Zahl "1" des Passworts durch Antippen der entsprechenden Zahl auf der Zahlenreihe 431 eingegeben. In der Ausführungsvariante in Fig. 15 hat das Antippen einer Zahl des Passworts zur Folge, dass die entsprechende Zahlenreihe aufhört sich zu bewegen. Hierdurch ist direkt erkennbar, welche Stelle des Passworts bereits eingegeben wurde. In einer alternativen Ausführungsvariante ist vorgesehen, dass die Zahlenreihe nach dem Antippen der Zahl des Passworts ihre Bewegung fortsetzt.

In Fig. 15(d) haben sich die Zahlenreihen 421, 422 und 432 um eine weitere Zahl nach oben bewegt. Hier wird nun die vierte Stelle des Passworts eingegeben. Durch Antippen der Zahl "5" wird diese als Teil des Passworts registriert. Hierbei ist es in der vorliegenden Ausführungsvariante nicht von Bedeutung, wo auf dem Bildschirm sich die Zahl des Passworts in der entsprechenden Zahlenreihe befindet. Dies hat den Vorteil, dass das Passwort nach vollständig erfolgter Passworteingabe nicht ohne Weiteres auf dem Bildschirm zu erkennen ist. Im vorliegenden Beispiel in Fig. 15(d) wird die Zahl der vierten Stelle des Passworts in der untersten Reihe mit dem Stift 9 angetippt. In Fig. 15(e) sind die Zahlenreihen, auf welchen noch keine Zahl des Passworts eingegeben wurde um eine weitere Stelle nach oben gerückt. Hier wird nun die zweite Stelle des Passworts "3" eingeben. In Fig. 15(f) wurde schließlich die letzte Zahl des Passworts auf der verbleibenden Zahlenreihe 421 angetippt, sodass nun das vollständige Passwort eingeben wurde.

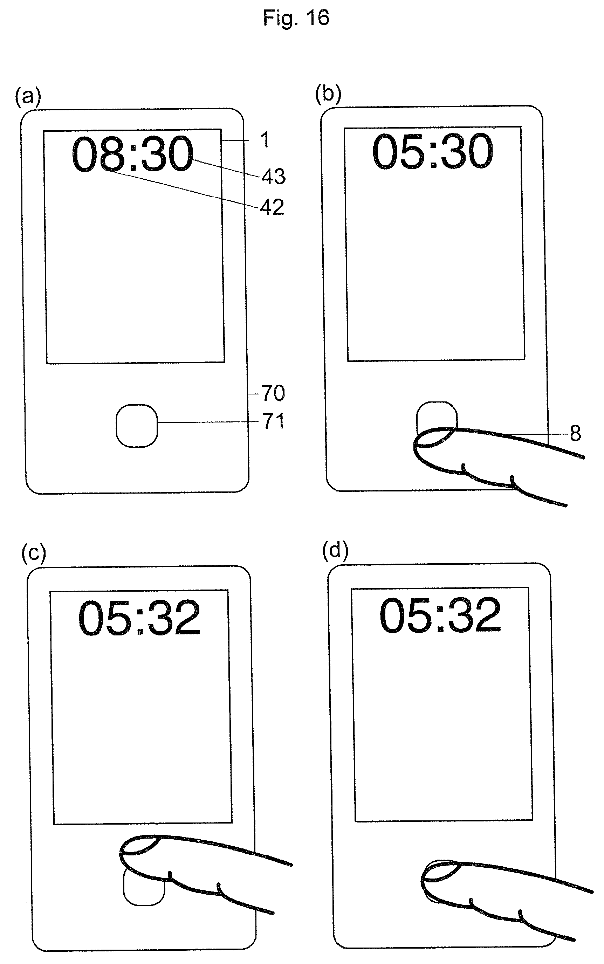

In Fig. 16 ist eine Ausführungsvariante des erfindungsgemäßen Verfahrens mit einem elektronischen Gerät 70 mit einem Bildschirm 1 und einer Funktionstaste bzw. einem Bedienknopf 71 dargestellt. Die Funktionstaste 71 registriert sowohl die Richtung von Streichbewegungen über die Taste als auch das Drücken der Taste. Solche Bedienknöpfe sind bspw. in Smartphones der Marke HTC wie dem Modell HTC Desire Z vorzufinden. Die Passworteingabe bei der vorliegenden Ausführungsvariante erfolgt nicht über den Bildschirm 1 sondern stattdessen über den Bedienknopf 71. Zur Passworteingabe wird durch vertikales Streichen über den Bedienknopf 71 sowie durch Drücken des Bedienknopfes anhand eines Fingers 8 das Passwort "05:32" auf der angezeigten Uhr eingestellt.

In Fig. 16(a) ist das Gerät 70 mit einer auf dem Bildschirm 1 dargestellten digitalen Uhr mit der Stundenanzeige 42 und der Minutenanzeige 43 zur Uhrzeit 8:30 Uhr abgebildet. Durch vertikales Streichen des Fingers 8 über den Bedienknopf 71 von oben nach unten wird nun die angezeigte Zahl der Stundenanzeige 42 der digitalen Uhr verringert. Wie in Fig. 16 (b) gezeigt, wird somit die Zahl "05" bei der Stundenanzeige 42 eingestellt. Zum Registrieren der eingestellten Zahl als Teil des Passworts wird nun der Bedienknopf gedrückt. Durch das Drücken des Bedienknopfes ist nun die Minutenanzeige 43 durch Streichen des Bedienknopfes mit dem Finger verstellbar. Wie in Fig. 16(c) dargestellt wird durch vertikales Streichen über den Bedienknopf von unten nach oben die angezeigte Minute erhöht. Nachdem die dem Passwort entsprechende Zahl auf der Minutenanzeige 43 eingestellt wurde, wird nun zum Registrieren des vollständigen Passworts der Bedienknopf 71 gedrückt, siehe Fig. 16(d).

Bei dem Ausführungsbeispiel des erfindungsgemäßen Verfahrens aus Fig. 16 wurden keine Spuren auf dem Touchscreen hinterlassen, die zur Identifizierung des eingegebenen Passworts verwendet werden können. Des Weiteren nimmt die zur Passworteingabe dargestellte Uhr nur einen geringen Bruchteil der Anzeige in Anspruch. Alternativ zu einer Funktionstaste ist in weiteren Ausführungsvarianten vorgesehen, ein Drehrad, einen Trackball oder ein Scrollrad direkt am Gerät oder an einem externen Gerät, wie bspw. einer Maus, für die Passworteingabe zu verwenden. Durch das Drehen dieser Eingabegeräte wird hier ein Element der Uhr verstellt und durch Drücken dieser oder weiterer Eingabegeräte wird die Stellung des Elements der Uhr registriert und die nächste Eingabe an demselben oder einem weiteren Element der Uhr ermöglicht.

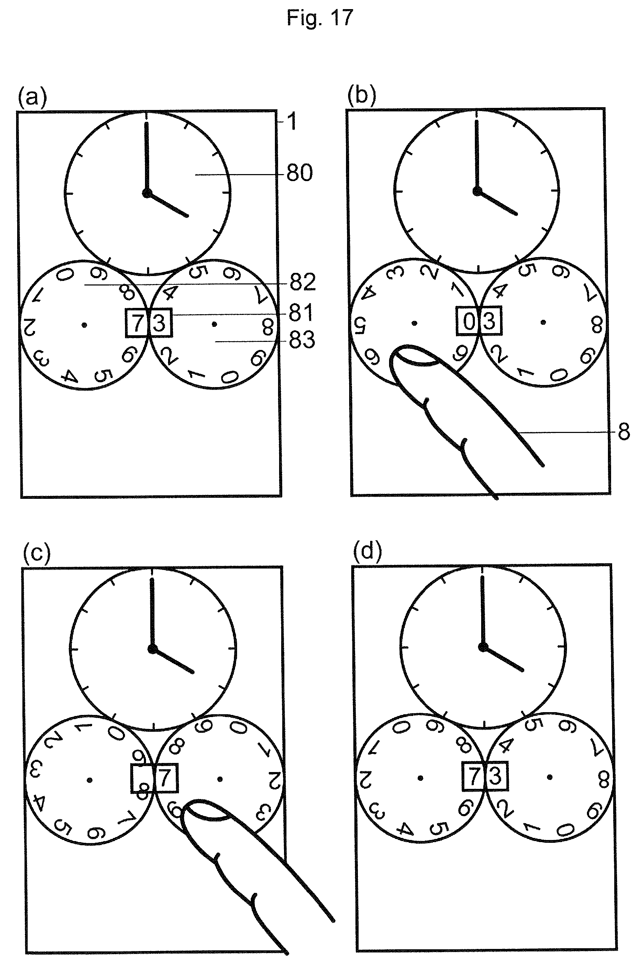

In Fig. 17 sind sequentiell vier Momentaufnahmen einer Ausführungsvariante des erfindungsgemäßen Verfahrens zur Passworteingabe anhand einer Uhr mit Gangreserveanzeige dargestellt. Die Gangreserve wird in diesem Beispiel anhand von zwei Scheiben 82, 83 dargestellt. Auf den zwei Scheiben 82, 83 der Gangreserve sind die Zahlen "0" bis "9" aufgetragen. Das Anzeigefeld 81 der Gangreserve umrahmt jeweils eine Zahl der zwei Scheiben 82, 83. Die in dem Anzeigefeld 81 von den zwei Scheiben 82, 83 angezeigten Zahlen entsprechen der Gangreserve, welche somit digital dargestellt ist. In dem vorliegenden Ausführungsbeispiel zeigt die Gangreserve den Ladezustand der Batterie in Prozent an. Bei abnehmendem Ladezustand rotiert die linke Scheibe 82 somit entgegen dem Uhrzeigersinn und die rechte Scheibe 83 im Uhrzeigersinn. Dementsprechend rotiert die linke Scheibe 82 beim Aufladen der Batterie im Uhrzeigersinn und die rechte Scheibe 83 entgegen dem Uhrzeigersinn. Neben der Gangreserve weist die Uhr eine analoge Anzeige 80 der Stunde und Minute auf.

Fig. 17(a) zeigt das Ausführungsbeispiel des erfindungsgemäßen Verfahrens vor der Passworteingabe zur Uhrzeit 4:00 Uhr. Der von der Gangreserve im Anzeigefeld 81 angezeigte Batterieladezustand beträgt 73 %. Das Passwort lautet "0-7" und soll anhand der beiden Scheiben 82, 83 in dem Anzeigefeld 81 eingestellt werden. Hierfür sind die Scheiben 82, 83 anhand von einer Berührung mit dem Touchscreen verstellbar. Nach einem Verstellen einer der Scheiben 82, 83 und dem Lösen der Berührung mit dem Touchscreen stellen sich die Scheiben 82, 83 wieder zurück, sodass das eingegebene Passwort zu keinem Zeitpunkt auf dem Bildschirm angezeigt wird.

In Fig. 17(b) wurde die linke Scheibe 82 der Gangreserveanzeige anhand von einer Berührung mit einem Finger 8 mit dem Touchscreen 1 im Uhrzeigersinn rotiert. Es wurde die erste Zahl des Passworts "0" im Anzeigefeld 81 eingestellt. Durch das Lösen der Berührung mit dem Touchscreen wird die Stellung der verstellten Scheibe registriert und dem Passwort zugeordnet. Nach dem Lösen der Berührung mit dem Touchscreen beginnt die verstellte Scheibe 82 sich entgegen dem Uhrzeigersinn in die Stellung zurückzudrehen, welche dem Ladezustand der Batterie entspricht.

In Fig. 17(c) wurde die zweite Zahl des Passworts "7" in dem Anzeigefeld 81 der Gangreserve anhand der rechten Scheibe 83 eingestellt. Die linke Scheibe 82 befindet sich in Fig. 17(c) noch im Rückstellvorgang. Nach dem Lösen der Berührung des Fingers 8 mit dem Touchscreen 1 wird die zweite Zahl des Passworts anhand der Stellung der Scheibe 83 registriert. Die rechte Scheibe 83 bewegt sich ebenfalls in die Stellung zurück, welche dem aktuellen Ladezustand der Batterie entspricht, siehe Fig. 17(d).

In weiteren Ausführungsbeispielen des erfindungsgemäßen Verfahrens mit Uhren mit Gangreserveanzeige bzw. Restlaufanzeige ist eine kombinierte Passworteingabe anhand der Stunden-, Minuten- und Gangreserveanzeige vorgesehen. Bspw. können bei einem vierstelligen Passwort die ersten zwei Zahlen des Passworts wie in dem Ausführungsbeispiel aus Fig. 3 anhand der Minuten- und Stundenzeiger und die zwei weiteren Zahlen des Passworts wie in dem Ausführungsbeispiel aus Fig. 17 anhand der Gangreserve eingegeben werden.

Die Gangreserveanzeige einer Uhr kann auf unterschiedliche Art und Weise erfolgen. Ähnlich dem Ausführungsbeispiel aus Fig. 17 mit zwei Zahlenscheiben können ebenso drei Zahlenscheiben verwendet werden, siehe Dokument US 2011/0182152 A1. Auch die Verwendung von einem Zeiger, der sich auf einer Vollkreis- oder Teilkreis-Skala zwischen den Werten "Auf" und "Ab" bewegt ist möglich. Bspw. können hier die Werte "leer", "halb aufgeladen" und "voll aufgeladen" als Teile des Passworts verwendet werden.

Die Gangreserveanzeige in Fig. 17 kann auch als Datumsanzeige verwendet werden. Hier wird in dem Anzeigefeld 81 anhand der beiden Scheiben 82, 83 die Zahl des Tages im jeweiligen Monat von "1" bis "31" angegeben. Die Passworteingabe nach dem erfindungsgemäßen Verfahren kann hier wie in Fig. 17 dargestellt erfolgen, mit dem Unterschied, dass die vor der Passworteingabe im Anzeigefeld 81 angezeigte Zahl nicht größer als "31" sein kann.

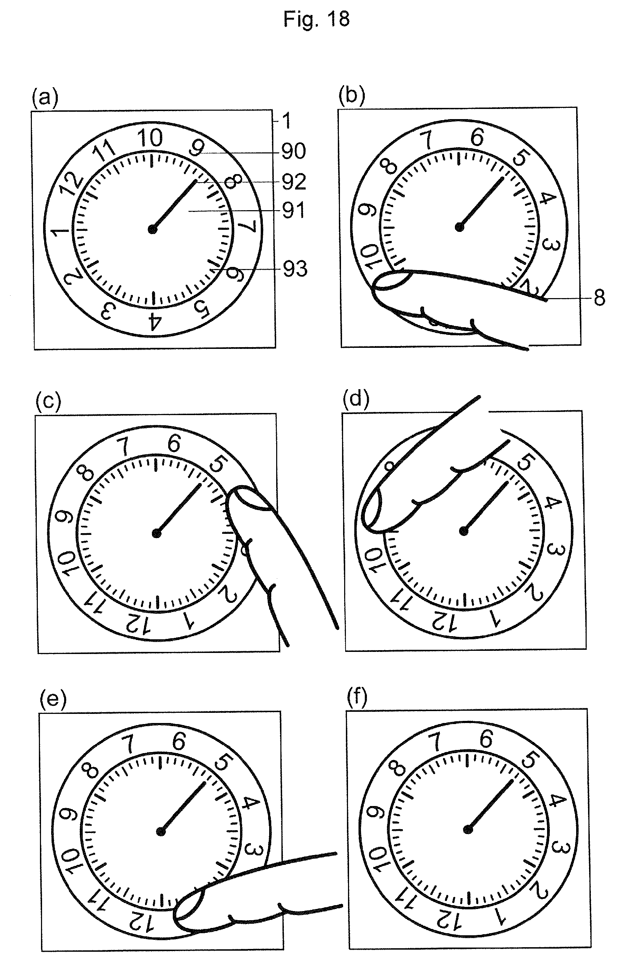

Ein weiteres Ausführungsbeispiel des erfindungsgemäßen Verfahrens zur Passworteingabe ist in Fig. 18 dargestellt. Die in dem Beispiel in Fig. 18 verwendete Uhr weist einen analogen Minutenzeiger 92 auf, der auf einem kreisförmigen Zifferblatt 91 mit einer 60-Minuten-Skala und den Minutenindexen 93 die aktuelle Minute anzeigt. In Fig. 18(a) zeigt der Minutenzeiger 92 somit auf die Minute "7". Die aktuelle Stunde wird digital anhand einer Stundenscheibe 90 dargestellt. Auf der Stundenscheibe sind die Stunden "1" bis "12" aufgetragen. Die Stundenscheibe 90 rückt jede Stunde um eine Zahl im Uhrzeigersinn weiter. Die aktuelle Stunde ist an der Position der Minute "0" bzw. "60" zu lesen und beträgt in Fig. 18(a) somit "10". Die von der Uhr in Fig. 18(a) angezeigte Zeit lautet 10:07 Uhr.

Zur Passworteingabe anhand der in Fig. 18(a) dargestellten Uhr kann die Stundenscheibe 90 durch eine Berührung mit dem Touchscreen 1 verstellt und angetippt werden. Der Minutenzeiger 92 mit der dazugehörigen Skala ist nicht verstellbar. Bei einem Verstellen der Stundenscheibe wird nach dem Lösen der Berührung mit dem Touchscreen die Stunde als Zahl des einzugebenden Passworts registriert, auf welche der Minutenzeiger zeigt. Bei einem Antippen der Stundenscheibe hingegen wird die Stunde als Zahl des einzugebenden Passworts registriert, welche angetippt wurde. Das einzugebende Passwort lautet "5-4-9-1".

In Fig. 18(b) wurde die Stundenscheibe 90 anhand von einer Berührung des Touchscreens 1 mit einem Finger 8 um ungefähr 110 Grad entgegen dem Uhrzeigersinn rotiert, sodass der Minutenzeiger 92 auf die Stunde "5" zeigt. Nach dem Lösen der Berührung mit dem Touchscreen wird somit die erste Zahl des Passworts "5" registriert. In den Figuren 18(c) bis 18(e) werden nacheinander die drei weiteren Zahlen des Passworts "4-9-1" mit dem Finger auf der Stundenscheibe angetippt, ohne die Winkelstellung der Stundenscheibe zu verändern. Somit ist das Passwort vollständig eingegeben. In Fig. 18(f) ist die Uhr nach der Passworteingabe dargestellt.

Das Ausführungsbeispiel des erfindungsgemäßen Verfahrens aus Fig. 18 hat den Vorteil, dass die Passworteingabe sehr schnell erfolgen kann, da die Zahlen des Passworts einfach angetippt werden können. Da die Stundenscheibe 90 mit jeder Stunde ihre Winkelstellung ändert, befinden sich die Spuren des Fingers nach der Passworteingabe zu unterschiedlicher Stunde an unterschiedlichen Stellen. Dies erschwert ein Entschlüsseln des eingegebenen Passworts anhand der Spuren auf dem Bildschirm. Durch die Möglichkeit einer manuellen Verstellung der Stundenscheibe wie in Fig. 18(b) kann das Entschlüsseln des eingegebenen Passworts noch zusätzlich erschwert werden.

Im Ausführungsbeispiel aus Fig. 18 werden die dem Passwort entsprechenden Zahlen auf der Stundenscheibe 90 mit dem Minutenzeiger 92 in Übereinstimmung gebracht. Alternativ können die Zahlen des Passworts auch unabhängig vom Minutenzeiger eingegeben werden. In einer weiteren Ausführungsvariante werden die dem Passwort entsprechenden Zahlen auf der Stundenscheibe an der Position der Minute "0" bzw. "60" eingestellt. Prinzipiell kann eine beliebige Winkelstellung zur Passworteingabe definiert werden. Die Winkelstellung würde vorzugsweise bei der Definition des Passworts zusammen mit den anderen Einstellungsmöglichkeiten zur Passworteingabe festgelegt werden.

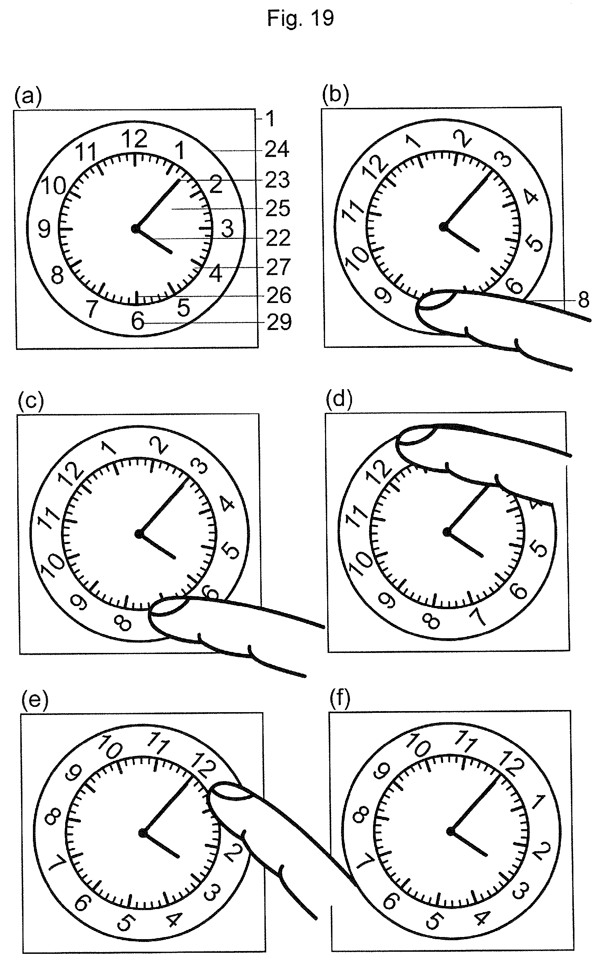

In Fig. 19 sind sequentiell Momentaufnahmen zur Passworteingabe eines weiteren Ausführungsbeispiels des erfindungsgemäßen Verfahrens abgebildet. Die in diesem Beispiel auf dem Bildschirm 1 angezeigte Uhr weist einen Stundenzeiger 22, einen Minutenzeiger 23 und ein Zifferblatt 25 mit den Minutenindexen 27 und Stundenindexen 26 auf. Auf der Lünette 24 sind die Stunden 29 aufgetragen. Die in Fig. 19(a) angezeigte Uhrzeit beträgt 4:07 Uhr.

Bei der Uhr aus dem Ausführungsbeispiel in Fig. 19 lässt sich die Lünette 24 zusammen mit dem Zifferblatt 25, den Stundenindexen 26, den Minutenindexen 27 und den auf der Lünette aufgetragenen Stunden 29 durch eine Benutzereingabe drehen. Die auf der Lünette aufgetragenen Zahlen werden zur Passworteingabe verwendet. Bei der Passworteingabe ist vorgesehen, dass der Stundenindex, welcher der ersten Zahl des Passworts entspricht, durch ein Drehen der Lünette mit dem Minutenzeiger in Übereinstimmung gebracht wird. Die darauffolgenden Zahlen des Passworts können auf der Lünette angetippt werden oder wiederum mit dem Minutenzeiger in Übereinstimmung gebracht werden. Zur Registrierung der zweiten, dritten und weiteren Zahlen des Passworts werden jeweils die Positionen zu Beginn und zum Ende einer Berührung mit dem Bildschirm 1 erfasst. Für den Fall, dass beide Positionen gleich sind, wird eine Zahl des Passworts dieser gemeinsamen Position zugeordnet. Für den Fall, dass beide Positionen unterschiedlich sind, wird sowohl zu Beginn der Berührung, als auch zum Ende der Berührung eine Zahl des Passworts zugeordnet. Hierbei wird der Position zu Beginn der Berührung die auf der Lünette angetippte Zahl dem Passwort zugeordnet. Zum Ende der Berührung wird dann die Zahl auf der Lünette dem Passwort zugeordnet, auf welche der Minutenzeiger zeigt. Das in Fig. 19 einzugebende Passwort lautet "3-7-1-12".

In Fig. 19(a) ist der Bildschirm 1 vor der Passworteingabe zur Uhrzeit 4:07 Uhr abgebildet. In Fig. 19(b) wurde die Lünette 24 anhand von einer Berührung mit einem Finger 8 so entgegen dem Uhrzeigersinn rotiert, dass die Stunde "3" mit dem Minutenzeiger 23 übereinstimmt. Nach dem Lösen der Berührung mit dem Bildschirm wird die mit dem Minutenzeiger übereinstimmende Stunde als erste Zahl des Passworts registriert. In den Figuren 19(c) und 19(d) werden die zweite Zahl "7" und und dritte Zahl "1" des Passworts angetippt. Die Berührung des Bildschirms zur Eingabe der dritten Zahl wird zum Drehen der Lünette gehalten. In Fig. 19(e) ist die Position der Berührung des Fingers mit dem Bildschirm dargestellt, bei welcher die in Fig. 19(d) begonnene Berührung mit dem Bildschirm beendet wird. Fig. 19(d) zeigt somit die Position zu Beginn der Berührung und Fig. 19(e) zeigt die Position zum Ende der Berührung. Da beide Positionen unterschiedlich sind, werden beiden Positionen separat Zahlen des Passworts zugeordnet. In Fig. 19(d) wird die angetippte Zahl "1" dem Passwort zugeordnet. Darauffolgend wird in Fig. 19(e) die mit dem Minutenzeiger übereinstimmende Zahl "12" dem Passwort zugeordnet. In Fig. 19(f) ist die auf dem Bildschirm angezeigte Uhr nach erfolgreicher Eingabe des Passworts abgebildet.

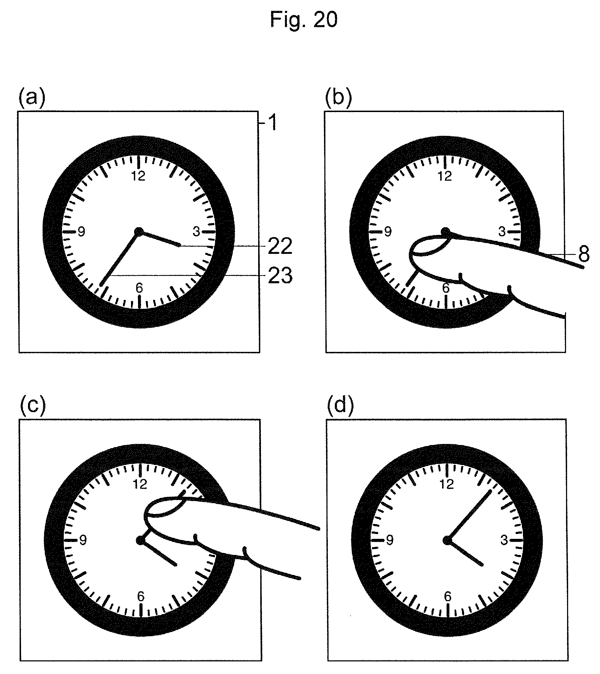

In einem alternativen Ausführungsbeispiel des erfindungsgemäßen Verfahrens sind zur Eingabe der ersten Zahl des Passworts mehrere Berührungen des Touchscreens notwendig, wobei durch die erste Berührung die auf dem Touchscreen abgebildete Uhr verstellt wird, siehe Fig. 20. In Fig. 20(a) ist auf einem Touchscreen 1 eine analoge Uhr mit einem Stundenzeiger 22 und einem Minutenzeiger 23 zur Uhrzeit 3:36 Uhr abgebildet. In der darauffolgenden Fig. 20(b) wird eine Berührung des Touchscreens mit einem Finger 8 an der Stelle des Minutenzeigers hergestellt. Anhand von der Berührung wird die angezeigte Uhrzeit nun mittels des Minutenzeigers verstellt, siehe Fig. 20(c). In Fig. 20(d) ist die verstellte Uhr dargestellt, welche nun die Uhrzeit 4:07 Uhr anzeigt. Auf der verstellten Uhr kann nun mittels weiterer Berührungen wie bspw. in den Ausführungsbeispielen aus den Figuren 4, 11 oder 12 ein Passwort eingegeben werden, sodass für die Eingabe der ersten Zahl des Passworts mehrere Benutzereingaben notwendig sind.

Das zusätzliche Verstellen der Uhr wie in dem Ausführungsbeispiel aus Fig. 20 kann dem Zwecke dienen, das Entschlüsseln des Passworts anhand der Spuren auf dem Bildschirm weiter zu erschweren. Um die Zeiger einer analogen Uhr zu verstellen, können diese sehr nahe an deren Rotationsachse berührt werden. Hierdurch kann ein Zeiger mittels einer sehr kleinen Bewegung um einen verhältnismäßig großen Winkel verstellt werden. Dies hat zur Folge, dass die neuen Zeigerstellungen nur sehr ungenau anhand der beim Verstellen der Zeiger auf dem Touchscreen hinterlassenen Spuren erkannt werden können.

Das zusätzliche Verstellen der Uhr wie in dem Ausführungsbeispiel aus Fig. 20 kann auch dem Zwecke dienen, die Passworteingabe zu erleichtern. Als Beispiel sei hier eine Passworteingabe anhand der Uhr aus Fig. 18(a) durch das Verstellen der Stundenscheibe 90 genannt, wobei zur Passworteingabe die den Zahlen des Passworts entsprechenden Stunden mit dem Minutenzeiger 22 in Übereinstimmung gebracht werden müssen. Wenn der Minutenzeiger bei der Passworteingabe bspw. auf die Minute "30" zeigt, würden die Stundenzahlen auf der Stundenscheibe beim Aufeinandertreffen mit dem Minutenzeiger auf dem Kopf stehen. Dies könnte leicht zu einer Verwechselung der Stunden "6" und "9" führen. Um dies zu verhindern, könnte der Minutenzeiger bspw. auf die Minute "55" gestellt werden, sodass die Stundenzahlen beim Aufeinandertreffen mit dem Minutenzeiger nicht auf dem Kopf stehen.

## Patentansprüche

1. Verfahren zum Eingeben eines Passworts, mit den folgenden Schritten:
- Bereitstellen einer Anzeigeeinrichtung (1), die mit einer Datenverarbeitungseinrichtung gekoppelt ist,
- Anzeigen einer Uhr (2) mit einem Uhrenelement (22, 23, 28) auf der Anzeigeeinrichtung (1), wobei eine erste Darstellung des Uhrenelements (22, 23, 28) zeitabhängig ist,
**dadurch gekennzeichnet, dass** das Passwort mittels einer der folgenden Abfolgen von Schritten eingegeben wird:
a) Erfassen einer Benutzereingabe mittels welcher die erste Darstellung des Uhrenelements (22, 23, 28) in eine weitere Darstellung überführt wird und
b) Registrieren eines alphanumerischen Zeichens des Passworts in der Datenverarbeitungseinrichtung, wobei das alphanumerische Zeichen des Passworts anhand der weiteren Darstellung des Uhrenelements (22, 23, 28) bestimmt wird, oder
a) Anzeigen eines weiteren Uhrenelements (24, 25, 26, 27) auf der Anzeigeeinrichtung (1), wobei eine erste Darstellung des weiteren Uhrenelements (24, 25, 26, 27) nicht zeitabhängig ist,
b) Erfassen einer Benutzereingabe mittels welcher die erste Darstellung des weiteren Uhrenelements (24, 25, 26, 27) in eine weitere Darstellung überführt wird und
c) Registrieren eines alphanumerischen Zeichens des Passworts in der Datenverarbeitungseinrichtung, wobei das alphanumerische Zeichen des Passworts anhand der weiteren Darstellung des weiteren Uhrenelements (24, 25, 26, 27) und einer Darstellung des Uhrenelements bestimmt wird.

2. Verfahren nach Anspruch 1, wobei die Darstellung des Uhrenelements und/oder die Darstellung des weiteren Uhrenelements nach Beendigung der Benutzereingabe jeweils von der weiteren Darstellung zurück in die erste Darstellung überführt wird.

3. Verfahren nach Anspruch 2, mit den folgenden Schritten,
- Erfassen einer weiteren Benutzereingabe während der Überführung des Uhrenelements (22, 23, 28) und/oder des weiteren Uhrenelements (24, 25, 26, 27) von der jeweiligen weiteren Darstellung zurück in die jeweilige erste Darstellung und
- Zuordnen eines weiteren alphanumerischen Zeichens des Passworts zu der Darstellung des Uhrenelements und/oder der Darstellung des weiteren Uhrenelements zum Zeitpunkt der weiteren Benutzereingabe oder
- Überführung der Darstellung des Uhrenelements und/oder der Darstellung des weiteren Uhrenelements zum Zeitpunkt der weiteren Benutzereingabe in eine weitere Darstellung und Zuordnen eines weiteren alphanumerischen Zeichens des Passworts zu der weiteren Darstellung des Uhrenelements und/ oder der weiteren Darstellung des weiteren Uhrenelements.

4. Verfahren nach einem der vorangehenden Ansprüche, mit den folgenden Schritten,
- Anzeigen einer weiteren Uhr (3) mit einem Uhrenelement (32, 33) auf der Anzeigeeinrichtung, wobei eine erste Darstellung des Uhrenelements der weiteren Uhr zeitabhängig ist,
- Erfassen einer weiteren Benutzereingabe und
- Zuordnen eines weiteren alphanumerischen Zeichens des Passworts zu der weiteren Benutzereingabe und der ersten Darstellung des Uhrenelements der weiteren Uhr oder einer weiteren Darstellung des Uhrenelements der weiteren Uhr.

5. Verfahren nach einem der vorangehenden Ansprüche, wobei eine weitere Benutzereingabe erfasst wird und ein weiteres alphanumerisches Zeichen des Passworts der weiteren Benutzereingabe und einer Darstellung des Uhrenelements oder einer Darstellung des weiteren Uhrenelements oder einer Darstellung eines anderen Uhrenelements zugeordnet wird.

6. Verfahren nach einem der vorangehenden Ansprüche, wobei ein weiteres alphanumerisches Zeichen des Passworts einer weiteren Benutzereingabe in Kombination mit einer Darstellung des Uhrenelements oder einer Darstellung des weiteren Uhrenelements oder einer Darstellung des anderen Uhrenelements zugeordnet wird, ohne das Uhrenelement oder das weitere Uhrenelement oder das andere Uhrenelement in eine weitere Darstellung zu überführen.

7. Verfahren nach einem der vorangehenden Ansprüche, wobei die Benutzereingabe mehrere Aktionen eines Benutzers umfasst.

8. Verfahren nach einem der Ansprüche 1 bis 6, wobei die Benutzereingabe genau eine Aktion des Benutzers umfasst und der Benutzereingabe in Kombination mit einer Darstellung des Uhrenelements oder einer Darstellung des weiteren Uhrenelements oder einer Darstellung des/eines anderen Uhrenelements mehrere alphanumerische Zeichen des Passworts zugeordnet werden.

9. Verfahren nach einem der vorangehenden Ansprüche, wobei die Anzeigeeinrichtung (1) eine berührungsempfindliche Anzeigeeinrichtung ist und als Benutzereingabe eine oder mehrere Berührungen der Anzeigeeinrichtung erfasst werden.

10. Verfahren nach einem der vorangehenden Ansprüche, wobei die Uhr als eine analoge Uhr (2) dargestellt wird und das Uhrenelement ein Stundenzeiger (22), ein Minutenzeiger (23), ein Sekundenzeiger (28) oder eine Restlaufanzeige (82, 83) ist.

11. Verfahren nach einem der Ansprüche 1 bis 10, wobei die Uhr als eine analoge Uhr (2) dargestellt wird und das weitere Uhrenelement ein Zifferblatt (25) oder eine Lünette (24) ist.

12. Verfahren nach einem der Ansprüche 1 bis 9, wobei die Uhr als eine digitale Uhr dargestellt wird und das Uhrenelement eine oder mehrere Zahlen oder ein oder mehrere Buchstaben ist.

13. Computerprogrammprodukt, das auf einem Datenträger gespeichert ist und das konfiguriert ist, bei einer Ausführung mittels einer Datenverarbeitungseinrichtung ein Verfahren nach einem der Ansprüche 1 bis 12 durchzuführen.

## Claims

1. A method for entering a password, comprising:
- providing a display means (1) which is coupled to a data processing means,
- displaying a timepiece (2) with a timepiece element (22, 23, 28) on the display means (1), wherein a first representation of the timepiece element (22, 23, 28) is time dependent,
**characterized in that** the password is entered by one of the following sequence of steps:
a) detecting a user input by which the first representation of the timepiece element (22, 23, 28) is transmitted into a further representation, and
b) registering an alphanumeric value of the password in the data processing means, wherein the alphanumeric value of the password is determined based on the further representation of the timepiece element (22, 23, 28),
or
a) displaying a further timepiece element (24, 25, 26, 27) on the display means (1), wherein a first representation of the further timepiece element (24, 25, 26, 27) is not time dependent,
b) detecting a user input by which the first representation of the further timepiece element (24, 25, 26, 27) is transmitted into a further representation, and
c) registering an alphanumeric value of the password in the data processing means, wherein the alphanumeric value of the password is determined based on the further representation of the further timepiece element (24, 25, 26, 27) and a representation of the timepiece element.

2. The method according to claim 1, wherein the representation of the timepiece element and / or the representation of the further timepiece element, after completion of the user input, is transferred back from the respective further representation to the respective first representation.

3. The method according to claim 2 comprising the following steps:
- detecting a further user input during the transfer of the timepiece element (22, 23, 28) and / or of the further timepiece element (24, 25, 26, 27) from the respective further representation back to the respective first representation and
- assigning a further alphanumeric character of the password to the representation of the timepiece element and / or the representation of the further timepiece element at the time of the further user input or
- transfer of the representation of the timepiece element and / or the representation of the further timepiece element at the time of the further user input to a further representation and assigning a further alphanumeric character of the password to the further representation of the timepiece element and / or the further representation of the further timepiece element.

4. The method according to one of the preceding claims with the following steps:
- displaying a further timepiece (3) with a timepiece element (32, 33) on the display means, wherein a first representation of the timepiece element of said further timepiece is time dependent,
- detecting a further user input and
- assigning a further alphanumeric character of the password to the further user input and the first representation of the timepiece element of said further timepiece or a further representation of the timepiece element of said further timepiece.

5. The method according to one of the preceding claims, wherein a further user input is detected and a further alphanumeric character of the password is assigned to the further user input and a representation of the timepiece element or a representation of the further timepiece element or a representation of another timepiece element.

6. The method according to one of the preceding claims, wherein a further alphanumeric character of the password is assigned to a further user input in combination with a representation of the timepiece element or a representation of the further timepiece element or a representation of the other timepiece element without a transfer of the timepiece element or the further timepiece element or the other timepiece element to a further representation.

7. The method according to one of the preceding claims, wherein the user input comprises a plurality of actions of a user.

8. The method according to one of claims 1 to 6, wherein the user input comprises exactly one action of the user and a plurality of alphanumeric characters of the password are assigned to said user input, in combination with a representation of the timepiece element or a representation of the further timepiece element or a representation of the other / another timepiece element.

9. The method according to one of the preceding claims, wherein the display means (1) is a touch-sensitive display means, and as user input, one or more contacts of the display means are detected.

10. The method according to one of the preceding claims, wherein the timepiece is represented as an analog timepiece (2) and the timepiece element is an hour hand (22), a minute hand (23), a second hand (28) or a power reserve indicator (82, 83).

11. The method according to one of claims 1 to 10, wherein the timepiece is represented as an analog timepiece (2) and the further timepiece element is a dial (25) or a bezel (24).

12. The method according to one of claims 1 to 9, wherein the timepiece is represented as a digital timepiece and the timepiece element is one or more numbers or one or more letters.

13. A computer program product which is stored on a data carrier and which is configured to carry out a method according to one of claims 1 to 12 when executed by means of a data processing device.

## Revendications

1. Procédé pour saisir un mot de passe, avec les étapes suivantes :
- la mise à disposition d'un dispositif d'affichage (1) qui est couplé avec un dispositif de traitement de données,
- l'affichage d'une montre (2) avec un élément de montre (22, 23, 28) sur le dispositif d'affichage (1), dans lequel une première représentation de l'élément de montre (22, 23, 28) est fonction du temps,
**caractérisé en ce que** le mot de passe est saisi au moyen de l'une des séquences d'étapes suivantes :
a) la détection d'une saisie utilisateur au moyen de laquelle on fait passer la première représentation de l'élément de montre (22, 23, 28) à une nouvelle représentation, et
b) l'enregistrement d'un caractère alphanumérique du mot de passe dans le dispositif de traitement de données, dans lequel le caractère alphanumérique du mot de passe est déterminé à l'aide de la nouvelle représentation de l'élément de montre (22, 23, 28), ou
a) l'affichage d'un nouvel élément de montre (24, 25, 26, 27) sur le dispositif d'affichage (1), dans lequel une première représentation du nouvel élément de montre (24, 25, 26, 27) n'est pas fonction du temps,
b) la détection d'une saisie utilisateur au moyen de laquelle on fait passer la première représentation du nouvel élément de montre (24, 25, 26, 27) à une nouvelle représentation, et
c) l'enregistrement d'un caractère alphanumérique du mot de passe dans le dispositif de traitement de données, dans lequel le caractère alphanumérique du mot de passe est déterminé à l'aide de la nouvelle représentation du nouvel élément de montre (24, 25, 26, 27) et d'une représentation de l'élément de montre.

2. Procédé selon la revendication 1, dans lequel on fait revenir la représentation de l'élément de montre et/ou la représentation du nouvel élément de montre, une fois la saisie utilisateur terminée, respectivement de la nouvelle représentation à la première représentation.

3. Procédé selon la revendication 2, avec les étapes suivantes :
- la détection d'une nouvelle saisie utilisateur pendant que l'on fait revenir l'élément de montre (22, 23, 28) et/ou le nouvel élément de montre (24, 25, 26, 27) de la nouvelle représentation respective vers la première représentation respective, et
- l'association d'un nouveau caractère alphanumérique du mot de passe à la représentation de l'élément de montre et/ou à la représentation du nouvel élément de montre au moment de la nouvelle saisie utilisateur, ou
- la réalisation du passage de la représentation de l'élément de montre et/ou de la représentation du nouvel élément de montre au moment de la nouvelle saisie utilisateur vers une nouvelle représentation, et l'association d'un nouveau caractère alphanumérique du mot de passe à la nouvelle représentation de l'élément de montre et/ou à la nouvelle représentation du nouvel élément de montre.

4. Procédé selon l'une des revendications précédentes, avec les étapes suivantes :
- l'affichage d'une nouvelle montre (3) avec un élément de montre (32, 33) sur le dispositif d'affichage, dans lequel une première représentation de l'élément de montre de la nouvelle montre est fonction du temps,
- la détection d'une nouvelle saisie utilisateur, et
- l'association d'un nouveau caractère alphanumérique du mot de passe à la nouvelle saisie utilisateur et à la première représentation de l'élément de montre de la nouvelle montre ou à une nouvelle représentation de l'élément de montre de la nouvelle montre.

5. Procédé selon l'une des revendications précédentes, dans lequel une nouvelle saisie utilisateur est détectée et un nouveau caractère alphanumérique du mot de passe étant associé à la nouvelle saisie utilisateur et à une représentation de l'élément de montre ou une représentation du nouvel élément de montre ou à une représentation d'un autre élément de montre.

6. Procédé selon l'une des revendications précédentes, dans lequel un nouveau caractère alphanumérique du mot de passe est associé à une nouvelle saisie utilisateur en combinaison avec une représentation de l'élément de montre ou une représentation du nouvel élément de montre ou une représentation de l'autre élément de montre, sans faire passer l'élément de montre ou le nouvel élément de montre ou l'autre élément de montre à une nouvelle représentation.

7. Procédé selon l'une des revendications précédentes, dans lequel la saisie utilisateur comprend plusieurs actions d'un utilisateur.

8. Procédé selon l'une des revendications 1 à 6, dans lequel la saisie utilisateur comprend exactement une action de l'utilisateur et plusieurs caractères alphanumériques du mot de passe étant associés à la saisie utilisateur en combinaison avec une représentation de l'élément de montre ou une représentation du nouvel élément de montre ou une représentation du/d'un autre élément de montre,.

9. Procédé selon l'une des revendications précédentes, dans lequel le dispositif d'affichage (1) est un dispositif d'affichage sensible à l'effleurement et un ou plusieurs effleurements du dispositif d'affichage étant détectés en tant que saisie utilisateur.

10. Procédé selon l'une des revendications précédentes, dans lequel la montre est représentée en tant que montre analogique (2) et l'élément de montre étant une aiguille des heures (22), une aiguille des minutes (23), une aiguille des secondes (28) ou une indication de temps résiduel (82, 83).

11. Procédé selon l'une des revendications 1 à 10, dans lequel la montre est représentée en tant que montre analogique (2) et l'autre élément de montre étant un cadran de montre (25) ou une lunette (24).

12. Procédé selon l'une des revendications 1 à 9, dans lequel la montre est représentée en tant que montre numérique et l'élément de montre étant un ou plusieurs chiffres et une ou plusieurs lettres.

13. Produit de programme informatique, lequel est enregistré sur un support de données et est configuré, lors d'une réalisation au moyen d'un dispositif de traitement de données, pour exécuter un procédé selon l'une des revendications 1 à 12.
